# EUROPÄISCHE PATENTSCHRIFT

(11) **EP 3 993 318 B1**
(45) Veröffentlichungstag und Bekanntmachung des Hinweises auf die Patenterteilung: **02.08.2023**
(21) Anmeldenummer: 21205326.8
(22) Anmeldetag: 28.10.2021
(51) Int. Cl.: H04L 9/40

(54) **BLOCKCHAIN-BASIERTES DIGITALES DOKUMENTENSYSTEM**
BLOCKCHAIN-BASED DIGITAL DOCUMENT SYSTEM
SYSTÈME DE DOCUMENT NUMÉRIQUE BASÉ SUR LA CHAÎNE DE BLOCS

(30) Priorität: 30.10.2020 DE 102020128685
(43) Veröffentlichungstag der Anmeldung: 04.05.2022
(73) Patentinhaber: Bundesdruckerei GmbH, 10969 Berlin (DE)
(72) Erfinder: RÜCKRIEMEN, Jörg, 10999 Berlin (DE)
(74) Vertreter: Richardt Patentanwälte PartG mbB

(56) Entgegenhaltungen:
- EP-A1- 3 413 507
- DE-B3-102017 204 536
- US-A1- 2019 044 727

## Beschreibung

Die Erfindung betrifft ein Verfahren zum Prüfen der Gültigkeit eines digitalen Dokuments unter Verwendung einer Blockchain sowie einen die Blockchain verwaltenden Blockchain-Server, welcher zum Ausführen des entsprechenden Verfahrens konfiguriert ist.

DE10 2017 204536 B3 ist relevanter Stand der Technik und offenbart ein Verfahren und System zum Ausstellen eines virtuellen Dokuments in einer Blockchain.

Für ein Verifizieren eines Dokuments ist es im Allgemeinen notwendig das entsprechende Dokument in seiner physischen Form vorzulegen. Dies gilt insbesondere bei amtlichen Dokumenten, wie beispielsweise Ausweisdokumenten. Sollen die Angaben eines Ausweisdokuments, beispielsweise im Zuge einer Identifikation des Ausweisinhabers, verifiziert werden, so ist das Ausweisdokument in physischer Form notwendig. Beispielsweise muss der Ausweisinhaber das entsprechende Ausweisdokument bei dem Prüfer, gegenüber dem er sich identifizieren möchte, persönlich vor Ort vorlegen. Handelt es sich bei dem Prüfer um ein Unternehmen, erfolgt dies beispielsweise in einer Filiale des Unternehmens. Alternativ kann der Nutzer das Ausweisdokument beispielsweise auch unter Verwendung einer Videoschaltung mit dem Prüfer, etwa in Zuge eines Videoidentifizierungsverfahrens, vorlegen. Da entsprechende Prüfungen aufwendig sind, werden diese häufig von Dritten, wie etwa der Post, für andere Unternehmen ausgeführt. Auch bei einer solchen Prüfung durch Dritte erfolgt beispielsweise in einer Filiale vor Ort oder unter Verwendung einer Videoschaltung. Hierbei muss für jede Prüfung des entsprechenden Dokuments jeweils von neuem das Dokument in seiner physischen Form, etwa vor Ort oder per Videoschaltung, vorgelegt werden.

Der Erfindung liegt demgegenüber die Aufgabe zugrunde, ein Verfahren zum Prüfen der Gültigkeit eines digitalen Dokuments zu schaffen.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum Prüfen der Gültigkeit eines digitalen Dokuments unter Verwendung einer Blockchain, welcher ein Smart Contract mit Programminstruktionen zugeordnet ist. Ein erster Block der Blockchain umfasst einen dem digitalen Dokument zugeordneten ersten Eintrag. Der erste Eintrag umfasst einen von einem Aussteller des digitalen Dokuments signierten Hashwert des digitalen Dokuments. Der Aussteller des digitalen Dokuments bestätigt mit der Signatur eine erfolgreiche Verifikation ein oder mehrerer von dem digitalen Dokument umfasster Angaben.

Das Verfahren umfasst:
- Empfangen einer Leseanfrage zum Auslesen des Hashwerts des digitalen Dokuments aus der Blockchain durch einen ersten Blockchain-Server von einem das digitale Dokument prüfenden Prüfcomputersystem über ein Netzwerk,
- Ausführen der Programminstruktionen des Smart Contracts durch den ersten Blockchain-Server, wobei ein Ausführen der Programminstruktionen des Smart Contracts ein Eintragen eines von dem Prüfcomputersystem signierten zweiten Eintrags in einen zusätzlichen zweiten Block der Blockchain umfasst, wobei der zweite Eintrag eine Prüfung durch das Prüfcomputersystem anzeigt,
- auf das Eintragen des zweiten Eintrags in den zusätzlichen zweiten Block der Blockchain hin, Senden des von dem ersten Eintrag umfassten Hashwerts des digitalen Dokuments an das Prüfcomputersystem durch den ersten Blockchain-Server über das Netzwerk zum Prüfen eines vom dem Prüfcomputersystem für das zu prüfende digitale Dokument berechneten Hashwerts, wobei das zu prüfende digitale Dokument von dem Prüfcomputersystem als gültig anerkannt wird, falls der von dem ersten Blockchain-Server gesendete Hashwert mit dem von dem Prüfcomputersystem für das zu prüfende digitale Dokument berechneten Hashwert übereinstimmt.

Ausführungsformen können den Vorteil haben, dass anstelle eines physischen Dokuments ein digitales Dokument verwendet werden kann. Die Authentizität der von dem digitalen Dokument umfassten Angaben wird durch die Blockchain belegt, in welcher der Hashwert des digitalen Dokuments gespeichert ist. Nur falls die entsprechenden Angaben zuvor von einem Aussteller des Dokuments verifiziert wurden, erfolgt eine Eintragung in die Blockchain. Der Aussteller bestätigt mit einem entsprechenden Eintrag des Hashwerts in die Blockchain also eine erfolgreiche Verifizierung der entsprechenden Angaben. Der Aussteller kann dabei prinzipiell beliebige Kombinationen von Angaben verifizieren und als digitalen Datensatz in Form des digitalen Dokuments ausstellen. Die entsprechenden Angaben können aus physischen Dokumenten übernommen werden, deren Prüfung beispielsweise Teil des Verifizierens ist, sie können von dem Aussteller selbst erstellt werden, etwa im Falle von Angaben eines Zeugnisses, wie etwa Zeugnisnoten, oder sie können von dem Inhaber des digitalen Dokuments zum Verifizieren durch den Aussteller bereitgestellt werden.

Ausführungsformen können den Vorteil haben, dass sich nach einem initialen Verifizieren der Angaben des digitalen Dokuments durch den Aussteller alle weiteren Prüfungen des digitalen Dokuments auf diese initiale Verifizierung stützen können. Es reicht mithin beispielsweise aus, das gegebenenfalls aufwendige Verifizieren der Angaben nur einmalig durchzuführen. Fortan kann ein Prüfen des Hashwerts des digitalen Dokuments mit dem in der Blockchain gespeicherten Hashwert für eine erfolgreiche Gültigkeitsprüfung verwendet werden, ohne dass die Angaben des digitalen Dokuments darüber hinaus weitergehend zu verifizieren wären.

Der zweite Eintrag, welcher die Prüfung durch das Prüfcomputersystem anzeigt, kenn beispielsweise vorteilhaft sein, da er eine Nachvollziehbarkeit bzw. Nachprüfbarkeit ermöglicht, ob tatsächlich eine Prüfung bzw. ein Zugriff auf den bzw. einen in der Blockchain gespeicherten Hashwert erfolgt ist. Der Umfang der Nachprüfbarkeit ist abhängig von den in dem zweiten Eintrag gespeicherten Informationen. Beispielsweise können in dem zweiten Eintrag das digitale Dokument und/oder der Prüfer identifiziert werden. Werden beide identifiziert, ist anhand des zweiten Eintrags beispielsweise nachprüfbar, wer welches digitale Dokument geprüft hat. Identifiziert der zweite Eintrag beispielsweise das digitale Dokument, aber nicht den Prüfer, ist nachprüfbar, dass das digitale Dokument geprüft wurde, aber der Prüfer und damit gegebenenfalls der Prüfkontext bleiben anonym. Identifiziert der zweite Eintrag beispielsweise den Prüfer, aber nicht das digitale Dokument, ist nachprüfbar, dass der Prüfer eine Prüfung ausgeführt hat, aber der Prüfgegenstand bzw. das digitale Dokument bleiben anonym.

Beispielsweise umfassen die Einträge der Blockchain zusätzlich jeweils einen Zeitstempel. Anhand eines entsprechenden Zeitstempels ist ferner beispielsweise nachprüfbar, wann eine Prüfung stattgefunden hat oder wann ein digitales Dokument ausgestellt wurde. Mithin ist beispielsweise nachprüfbar, wie lange etwa ein Verifizieren der Angaben des digitalen Dokuments her ist. Daraus kann beispielsweise abgeleitet werden, ob gegebenenfalls eine erneute Verifikation der Angaben notwendig ist, um sicherzustellen, dass diese nach wie vor aktuell sind, falls die bisherige Verifikation bereits längere Zeit zurückliegt.

Nach Ausführungsformen handelt es sich bei dem digitalen Dokument beispielsweise um ein digitales Ausweisdokument, dessen Angaben im Zuge einer Identifizierung des Inhabers des digitalen Ausweisdokuments durch den Aussteller unter Verwendung eines physischen Ausweisdokuments des Inhabers, welches dieselben Angaben wie das digitale Ausweisdokument umfasst, beispielsweise vor Ort oder unter Verwendung einer Videoschaltung, verifiziert wurden. Der Aussteller verwendet die verifizierten Angaben beispielsweise zum Erstellen eines digitalen Datensatzes, welchen das digitale Dokument umfasst und/oder welcher das digitale Dokument darstellt. Zur Bestätigung der Verifizierung der Angaben des digitale Ausweisdokuments wird ein Hashwert des entsprechenden digitalen Ausweisdokuments in der Blockchain gespeichert. Nun kann das digitale Ausweisdokument beispielsweise als Ersatz des physischen Ausweisdokuments verwendet werden, etwa zum Nachweis und/oder Bereitstellen der von dem digitalen Ausweisdokument umfassten Angaben. Dies kann insbesondere zum Nachweisen bzw. Bereitstellen in einer digitalen Umgebung, etwa über ein Netzwerk, wie das Internet, von Vorteil sein. Das digitale Ausweisdokument kann über das Netzwerk gesendet werden. Der Empfänger kann das digitale Ausweisdokument unter Verwendung der Blockchain, in welcher dessen Hashwert hinterlegt ist verifizieren. Bei einer Übereinstimmung des Hashwerts eines empfangenen digitalen Ausweisdokuments mit einem in der Blockchain hinterlegten Hashwert, kann der Empfänger von der Authentizität der Angaben des digitalen Ausweisdokuments ausgehen, deren Verifizierung der Aussteller des digitalen Ausweisdokuments mit dem Eintrag des Hashwerts in der Blockchain bestätigt.

Ausführungsformen können den Vorteil haben, dass als Teil bzw. zum Nachweis einer selbstsouveränen Identität (engl.: "Self-Sovereign Identity") erstellte und/oder verwendete Dokumente unter Verwendung der Blockchain effizient und zuverlässig auf ihre Gültigkeit geprüft werden können. Der Umfang digitaler Aktivitäten und Angebote, welche Nutzer heutzutage ausüben und auf welche sie zurückgreifen, nimmt stetig zu. Hierfür greifen Nutzer auf eine Vielzahl von digitalen Plattformen zu, welche die entsprechenden Aktivitäten und Angebote bereitstellen und für deren Nutzung die Nutzer jeweils digitale Identitäten benötigen. Beispielsweise werden entsprechende digitale Identität im Zuge einer Erstellung von Nutzerprofil erzeugt bzw. verwendet. Derartige digitale Identitäten bedürfen eines Informationsmanagements, da es sich bei diesen zumeist um personenbezogene und damit potentiell sensible Daten der Nutzer handelt. Mit der Nutzung der entsprechenden personenbezogenen Daten geht die Notwendigkeit seitens der digitalen Plattformen bzw. der hinter diesen stehenden Unternehmen oder Institutionen einher Verantwortung für diese personenbezogener Daten zu übernehmen und deren Schutz sicherzustellen. Dies kann sich sehr aufwendig gestalten und die entsprechenden digitalen Plattformen vor große Herausforderungen stellen.

Eine selbstsouveräne Identität (Self-Sovereign Identity) beschreibt ein Paradigma für digitale Identitäten, gemäß dem der einzelne Nutzer die volle Souveränität über seine eigenen Identitäten besitzt sollte. Der Nutzer hat dabei die volle Kontrolle über seine Identitätsdaten bzw. personenbezogenen Daten. Er wird also selbst zum Identity Provider und bestimmt, wer auf welche seiner Identitätsdaten und assoziierte Informationen Zugriff erhält.

Hierzu verwendet der Nutzer beispielsweise ein mobiles tragbares Telekommunikationsgerät mit einer mobilen App, welche Identitäts-Kommunikationsprotokoll ausführt und beispielsweise auf eine Blockchain zugrückgreift. Die mobile App des Nutzers dient dabei als eine "Identitäts-Wallet", welche eine Mehrzahl von digitalen ID-Dokumenten des Nutzers, wie etwa Personalausweis, Führerschein etc., umfasst und verwaltet. Der Nutzer ist dafür verantwortlich, welche ID-Dokumente er in die App lädt, wem er diese ID-Dokumente zur Verfügung stellt und dass diese sicher aufbewahrt werden, d.h. dass der Zugriff auf die mobile App gesichert ist. Das Identitäts-Kommunikationsprotokoll ermöglicht es, ID-Dokumente sicher auszutauschen bzw. bereitzustellen. Die Blockchain ermöglicht es, die bereitgestellten Informationen der digitalen ID-Dokumente auf ihre Gültigkeit hin zu prüfen.

Ein exemplarischer Anwendungsfall könnte beispielsweise eine digitale Führerscheinprüfung über eine Onlineverbindung sein, bei welcher verschiedenen Autovermietungen oder Carsharing-Anbieten, etwa im Smart-City-Bereich, beteiligt sind. Ein Aussteller, z.B. Autovermietung A, prüft einen physischen Führerschein und/oder einen physischen Ausweis eines Nutzers vor Ort in einer Filiale oder unter Verwendung einer Videoschaltung. Der Aussteller verwendet Angaben des physischen Führerscheins und/oder des physischen Ausweises, um einen digitalen Datensatz zusammenzustellen und aus diesem ein digitales Dokument zu erstellen, welches für die Autovermietung relevante Angaben zu dem Nutzer umfasst. Das digitale Dokument, welches beispielsweise von dem Aussteller signiert ist, stellt beispielsweise einen digitalen Zwilling des Führerscheins und/oder Ausweis des Nutzers dar. Dieses digitale Dokument stellt der Aussteller dem Nutzer als Inhaber zur weiteren Nutzung zur Verfügung. Andere Autovermietungen, wie etwa eine Autovermietung B, benötigen beispielsweise dieselben Daten des Nutzers, welche das digitale Dokument umfasst und Autovermietung A bereits verifiziert hat. Eine erneute aufwendige Verifizierung der entsprechenden Daten durch die Autovermietung B kann mithin vermieden werden, indem der Nutzer das von Autovermietung A ausgestellte digitale Dokument verwendet. Der Nutzer legt das entsprechende digitale Dokument bei Bedarf beispielsweise bei Autovermietung B vor, welche dessen Gültigkeit unter Verwendung der Blockchain prüfen kann. Falls Autovermietung B das digitale Dokument unter Verwendung der Blockchain prüft, d.h. das von Autovermietung A ausgestellte digitale Dokument akzeptiert, wird dies beispielsweise durch einen Eintrag in die Blockchain vermerkt.

Nach Ausführungsformen erfolgt die Verifikation der ein oder mehreren von dem digitalen Dokument umfassten Angaben durch den Aussteller unter Verwendung ein oder mehrerer physischer Dokumente, insbesondere amtlicher Dokumente, des Inhabers des digitalen Dokuments. Die entsprechenden Dokumente können dem Aussteller beispielsweise von dem Inhaber des auszustellenden digitalen Dokuments beispielsweise vor Ort oder unter Verwendung einer Videoschaltung vorgelegt werden.

Nach Ausführungsformen bestätigt der Aussteller des digitalen Dokuments mit seiner Signatur eine erfolgreiche Verifikation aller von dem digitalen Dokument umfassten Angaben.

Unter einem "Dokument" wird ein Schriftträger bzw. ein physischer Dokumentenkörper verstanden, welcher Informationen umfasst. Informationen kann ein Dokument auch in elektronisch gespeicherter Form in einem integrierten Speicher umfassen. Insbesondere wird unter einem Dokument eine Urkunde, ein Zeugnis, oder ein Ausweis-, Wert- oder Sicherheitsdokument, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder ein Firmenausweis, oder ein anderes ID-Dokument, eine Chipkarte, Zahlungsmittel, insbesondere Banknote, Bankkarte oder Kreditkarte, Frachtbrief oder ein sonstiger Berechtigungsnachweis verstanden. Insbesondere kann es sich bei dem Dokument um ein Machine-Readable Travel Document, wie beispielsweise von der Internationalen Luftfahrtbehörde (ICAO) und/oder dem BSI standardisiert, handeln.

Unter einem "digitalen" Dokument wird ein Datenkonstrukt zur elektronischen Datenverarbeitung verstanden. Ein digitales Dokument kann insbesondere dieselben Daten wie ein zuvor definiertes physisches Dokument umfassen. Jedoch umfasst es keinen fest zugeordneten physischen Dokumentenkörper. Ein digitales Dokument, auch als elektronisches Dokument bezeichnet, kann somit beispielsweise einen Text, eine Zahlentabelle, ein Bild oder eine Folge oder Kombination von Texten, Tabellen oder Bildern umfassen, welche durch Digitalisieren, d.h. eine Umwandlung in einen Binärcode, in Dateiform angelegt oder überführt wurden. Insbesondere ist die Gültigkeit eines solchen Dokuments unabhängig von dem Vorhandensein eines fest zugeordneten Dokumentenkörpers. Bei einem "digitalen" Dokument kann es sich um eine elektronische Datei eines beliebigen Dateiformats handeln, insbesondere eine nicht ausführbare Text- oder Tabellendatei. Ferner kann es sich bei einem digitalen Dokument beispielsweise auch um eine Videodatei, eine Audiodatei, ein Programmcode, eine ausführbare Datei, ein Archiv oder Ähnliches handeln.

Eine Urkunde ist eine Erklärung in Text- oder Schriftform, welche einen bestimmten Tatbestand bzw. Sachverhalt fixiert. Zudem kann die Urkunde den Aussteller der Urkunde identifizieren. Bei einem Zeugnis kann es sich beispielsweise um Schul- oder Universitätszeugnisse, Bescheinigungen über eine erfolgreiche Teilnahme an Fortbildungen bzw. Kursen, Vorlesungsscheine, Praktikumsbescheinigungen oder Arbeitszeugnisse handeln.

Bei einem Zeugnis kann es sich beispielsweise um ein IHK-Prüfungszeugnis handeln, das eine Urkunde ist, die einem erfolgreichen Absolventen nach bestandener Abschlussprüfung vor der Industrie- und Handelskammer (IHK) in einem anerkannten Ausbildungsberuf oder einer Aufstiegsfortbildung ausgehändigt wird. Ein IHK-Zeugnis umfasst beispielsweise Angaben über den erlernten Beruf, d.h. eine Berufsbezeichnung, und die bestandene Abschlussprüfung. Das Zeugnis kann in einem einheitlichen Layout erscheinen und die Berufsbezeichnung sowie Fachrichtung oder Schwerpunkt enthalten. Das Gesamtergebnis mit Note und Punktzahl steht oberhalb der einzelnen Prüfungsergebnisse. Auf Antrag des Prüfungsteilnehmers kann eine Berufsschulnote unterhalb der einzelnen Prüfungsergebnisse ausgewiesen sein.

Darüber hinaus kann es sich bei einem Dokument beispielsweise auch um einen Facharbeiterbrief, Gesellenbrief, Meisterbrief, eine Bachelor-Urkunde, Master-Urkunde, Magisterurkunde, Diplomurkunde, Promotionsurkunde oder Approbationsurkunde handeln.

Unter einer "Blockchain" wird hier und im Folgenden eine geordnete Datenstruktur verstanden, welche eine Mehrzahl von miteinander verketteten Datenblöcken umfasst. Insbesondere wird unter einer Blockchain eine geordnete Datenstruktur verstanden, bei welcher jeder der Blöcke (außer dem ersten Block) einen Prüfwert, beispielsweise einen Hash-Wert, seines Vorgängerblocks umfasst und somit anhand jedes Blocks die Gültigkeit aller seiner Vorgängerblocks geprüft und ggf. bestätigt werden kann. Für Beispiele einer Blockchain vergleiche https://en.wikipedia.org/wiki/Block_chain_(database) und "Mastering Bitcoin", Chapter 7, The Blockchain, Seite 161 ff. Das Konzept der Blockchain wurde beispielsweise im Jahre 2008 in einem White Paper unter dem Pseudonym Satoshi Nakamoto zu Bitcoin beschrieben ("Bitcoin: Peer-to-Peer Electronic Cash System" (https://bitcoin.org/bitcoin.pdf)). Die darin beschriebene Blockchain besteht aus einer Reihe von Datenblöcken, in denen jeweils ein oder mehrere Einträge bzw. Transaktionen zusammengefasst und mit einer Prüfsumme in Form eines Hashwerts versehen sind. Zusätzliche Blöcke der Blockchain werden beispielsweise in einem rechenintensiven Prozess erzeugt, der auch als sogenanntes Mining bezeichnet wird. Diese zusätzlich erzeugten Blöcke werden anschließend der Blockchain hinzugefügt und über ein Netzwerk an alle Teilnehmer, bzw. Knoten des Netzwerks, verbreitet.

Ausführungsformen können den Vorteil haben, dass die Blockchain durch die Speicherung kryptografischer Prüfsumme, d.h. Hashwerten, des vorangehenden Blocks im jeweils nachfolgenden Block ein hohes Maß an Sicherheit gegenüber nachträglichen Manipulationen bietet. Das Verketten der Blöcke kann dann unter Verwendung dieser Root-Hashwerte überprüft werden. Jeder Block der Blockchain enthält in seinem Header den Hash des gesamten vorherigen Blockheaders. Somit wird die Reihenfolge der Blöcke eindeutig festgelegt und es entsteht eine Kettenstruktur. Durch die so implementierte Verkettung der einzelnen Blöcke miteinander wird erreicht, dass ein nachträgliches Modifizieren vorangegangener Blöcke bzw. einzelner Einträge praktisch ausgeschlossen ist, da hierfür die Hashwerte aller nachfolgenden Blöcke in kurzer Zeit ebenfalls neu berechnet werden müssten.

Eine Blockchain kann beispielsweise auch in Form einer privaten Blockchain implementiert werden, wobei nur eine ausgewählte Gruppe von Teilnehmern eine Berechtigung zum Hinzufügen gültiger Blöcke besitzt. Eine entsprechende Berechtigung kann beispielsweise mittels einer Signatur unter Verwendung eines privaten kryptographischen Schlüssels nachgewiesen werden. Der private kryptographische Schlüssel kann zu einem asymmetrischen Schlüsselpaar gehören, zu welchem auch ein öffentlicher kryptographischer Schlüssel gehört, mit dem die Signatur geprüft werden kann. Dem asymmetrischen Schlüsselpaar kann zudem beispielsweise ein Zertifikat zugeordnet sein, welches die Berechtigung zum Erzeugen eines gültigen Blocks der Blockchain belegt. Dieses Zertifikat kann ferner einer PKI zugeordnet sein, welche die Authentizität des Zertifikats belegt. Nach einer weiteren Ausführungsform kann beispielsweise für jeden Teilnehmer aus der ausgewählten Gruppe ein öffentlicher Schlüssel in der Blockchain hinterlegt sein, beispielsweise in einem Genesisblock. Anhand dieser öffentlichen Schlüssel kann geprüft werden, ob Signaturen von Blöcken und damit die entsprechenden Blöcke selbst gültig sind.

Ein Konsens kann auch auf andere Weise in einer Blockchain implementiert werden. So kann etwa ein Konsens erreicht werden, indem über eine Aufnahme vorgeschlagener Einträge in die Blockchain abgestimmt wird. Beispielsweise führt jeder Teilnehmer eine eindeutige Liste anderer Teilnehmer, welchen er als Gruppe vertraut. Jeder Teilnehmer kann zusätzliche Einträge vorschlagen, die in einen zusätzlichen Block der Blockchain aufgenommen werden sollen. Über die Aufnahme und damit die Anerkennung der Gültigkeit der vorgeschlagenen Einträge wird abgestimmt. So stimmt beispielsweise jeder Teilnehmer nur über diejenigen Vorschläge ab, welche von Teilnehmer seiner Liste stammen. Mit anderen Worten werden für die Entscheidung, ob ein Vorschlag für einen zusätzlichen Eintrag als gültig anerkannt wird, d.h. ob bezüglich der Gültigkeit dieses Eintrages ein Konsens zwischen den Teilnehmern besteht, nur die Stimmen derjenigen Teilnehmer berücksichtigt, die von der Liste desjenigen Teilnehmers umfasst sind, der den entsprechenden Vorschlag macht. Damit ein Vorschlag für einen Eintrag als gültig angenommen wird, muss ein bestimmter Minimumanteil an stimmberechtigten Teilnehmern mit Ja stimmen, beispielsweise 80%. Alle vorgeschlagenen Einträge, die dieses Kriterium erfüllen, werden in die Blockchain aufgenommen. Eine solche Abstimmung kann mehrere Runden umfassen. Alle anderen Vorschläge, die das zuvor genannte Kriterium nicht erfüllen, werden verworfen oder bei der Abstimmung über den nächsten Block der Blockchain erneut zur Abstimmung gestellt. Die zuvor genannten Listen stellen Untergruppen des Blockchain-Netzwerks dar, denen der Teilnehmer, welcher die jeweilige Liste führt, als Gruppe insgesamt traut, ohne dass dies erfordert, dass er jedem einzelnen Teilnehmer der Liste traut. Ein Beispiel für ein solches Konsensverfahren bietet der Ripple Protokoll Konsens Algorithmus (David Schwartz et al.: "The Ripple Protocol Consensus Algorithm", Ripple Labs Inc., 2014, https://ripple.com/files/ripple_consensus_whitepaper.pdf).

Zur Überprüfung der Einträge der Blockchain bzw. zum Suchen von Hashwerten kann ein GUI, beispielsweise in Form einer Internetseite durch eine Verwaltungsinstanz der Blockchain bereitgestellt werden. Beispielsweise kann es sich bei der Blockchain um eine private, z.B. unternehmensinterne oder verbundinterne, oder öffentliche Blockchain handeln. Beispielsweise handelt es sich um eine Bitcoin-, Litecoin- oder Ethereum-Blockchain.

Unter einem "Smart Contract" wird ein der Blockchain zugeordnetes Programmmodul verstanden. Ein Programmmodul bezeichnet hier ein eigenständiges Programm, welches beispielsweise zusammen mit einer Blockchain und/oder in der Blockchain gespeichert sein kann. Das Programmmodul kann dazu konfiguriert sein das Erstellen, Prüfen und/oder Auslesen von dem Programmmodul zugeordneten Einträgen in der Blockchain zu steuern. Bei einem Programmmodul kann es sich beispielsweise um einen Smart Contract handeln, wie er beispielsweise in der Ethereum Blockchain implementierbar ist.

Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Unter einer "Schnittstelle" wird hier eine Schnittstelle verstanden, über die Daten empfangen und gesendet werden können, wobei die Kommunikationsschnittstelle kontaktbehaftet oder kontaktlos konfiguriert sein kann. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist.

Eine Kommunikation kann beispielsweise über ein Netzwerk erfolgen. Unter einem "Netzwerk" wird hier jedes Übertragungsmedium mit einer Anbindung zur Kommunikation verstanden, insbesondere eine lokale Verbindung oder ein lokales Netzwerk, insbesondere ein Local Area Network (LAN), ein privates Netzwerk, insbesondere ein Intranet, und ein digitales privates Netzwerk (Virtual Private Network - VPN). Beispielsweise kann ein Computersystem eine Standardfunkschnittstelle zur Anbindung an ein WLAN aufweisen. Ferner kann es sich um ein öffentliches Netzwerk, wie beispielsweise das Internet handeln. Je nach Ausführungsform kann diese Verbindung auch über ein Mobilfunknetz hergestellt werden.

Unter einem "Speicher" werden hier sowohl flüchtige als auch nichtflüchtige elektronische Speicher bzw. digitale Speichermedien verstanden.

Unter einem "nichtflüchtigen Speicher" wird hier ein elektronischer Speicher zur dauerhaften Speicherung von Daten verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "flüchtigen elektronischen Speicher" wird hier ein Speicher zur vorübergehenden Speicherung von Daten, welcher dadurch gekennzeichnet ist, dass alle Daten nach dem Abschalten der Energieversorgung verloren gehen. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem "geschützten Speicherbereich" wird hier ein Bereich eines elektronischen Speichers verstanden, auf den ein Zugriff, das heißt ein Lesezugriff oder ein Schreibzugriff, nur bei Erfüllung einer hierfür erforderlichen Bedingung möglich ist. Hierbei kann es sich zum Beispiel um eine kryptografische Bedingung, insbesondere eine erfolgreiche Authentisierung und/oder eine erfolgreiche Berechtigungsprüfung, handeln. Beispielsweise ist ein Zugriff nur über einen Prozessor der den Speicher mit dem geschätzten Speicherbereich umfassenden Vorrichtung möglich. Nach Ausführungsformen ist der Zugriff von einem mit dem Speicher gekoppelten Prozessor nur dann möglich, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Ein Prozessor umfasst beispielsweise ein Rechenwerk, ein Steuerwerk, Register und Datenleitungen zur Kommunikation mit anderen Komponenten. Insbesondere wird unter einem "Prozessor" ein Mikroprozessor oder ein Mikroprozessorsystem aus mehreren Prozessorkernen und/oder mehreren Mikroprozessoren verstanden.

Unter einem "Zertifikat" wird hier ein digitales Zertifikat verstanden, welches auch als Public-Key-Zertifikat bezeichnet wird. Durch solche Zertifikate basierend auf asymmetrischen Schlüsselpaaren wird eine so genannte Public-Key-Infrastructure (PKI) realisiert. Bei einem solchen Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Ein Zertifikat kann beispielsweise einen öffentlichen Schlüssel beinhalten und signiert sein. Alternativ sind auch Zertifikate basierend auf Zero-Knowledge-Kryptosystemen möglich. Beispielsweise kann das Zertifikat dem Standard X.509 oder einem anderen Standard entsprechen. Beispielsweise handelt es sich um ein CV-Zertifikat (Card Verifiable Certificate/CVC).

Digitale Zertifikate sind bei der Absicherung elektronischer Kommunikation durch asymmetrische kryptographische Verfahren ein bewährtes Mittel, um Berechtigungen nachzuweisen. Zertifikate sind strukturierte Daten, die die Authentizität und/oder weitere Eigenschaften/Berechtigungen des Eigentümers eines öffentlichen Schlüssels (Signaturprüfschlüssel) dokumentieren und durch eine unabhängige, glaubwürdige Instanz (Zertifizierungsdienstanbieter/ZDA), im Allgemeinen die das Zertifikat zuteilende Zertifizierungsstelle, bestätigen. Zertifikate werden in der Regel einem breiten Personenkreis zur Verfügung gestellt, um diesem eine Prüfung elektronischer Signaturen auf Authentizität und Gültigkeit zu ermöglichen.

Ein Zertifikat kann einer elektronischen Signatur zugeordnet sein, wenn der zu dem öffentlichen Schlüssel gehörende private Schlüssel zur Generierung der zu prüfenden elektronischen Signatur verwendet wurde. Dadurch, dass ein ZDA ein Zertifikat in Assoziation mit einem öffentlichen Schlüssel der Allgemeinheit zur Verfügung stellt, ermöglicht ein ZDA den Nutzern asymmetrischer Kryptosysteme den öffentlichen Schlüssel einer Identität, beispielsweise einer Person, einer Organisation, einem Energie- oder Computersystem, zuzuordnen.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem öffentlichen Schlüssel, welcher zur Ver- und/oder Entschlüsselung von Daten verwendet wird und an Dritte, beispielsweise an einen Dienstanbieter, weitergegeben werden darf, sowie einem privaten Schlüssel, welcher zur Ver- und/oder Entschlüsselung von Daten verwendet wird und im Regelfall geheim gehalten werden muss. Der öffentliche Schlüssel ermöglicht es jedermann, Daten für den Inhaber des privaten Schlüssels zu verschlüsseln, digitale Signaturen von dessen Dokumenten zu prüfen oder ihn zu authentifizieren. Ein privater Schlüssel ermöglicht es seinem Inhaber, mit dem öffentlichen Schlüssel verschlüsselte Daten zu entschlüsseln oder digitale Signaturen für elektronische Dokumente zu erstellen. Eine mit einem privaten Schlüssel erstellte Signatur kann mit dem zugehörigen öffentlichen Schlüssel verifiziert werden.

Die Erstellung einer digitalen Signatur, im Folgenden auch lediglich als "Signatur" bezeichnet, ist ein kryptographisches Verfahren, bei dem zu beliebigen Daten, zum Beispiel einem elektronischen Dokument, ein weiterer Datenwert, welcher als "Signatur" bezeichnet wird, berechnet wird. Die Signatur kann zum Beispiel ein verschlüsselter Hashwert des elektronischen Dokumentes sein, insbesondere ein mit einem privaten Schlüssel eines einem Zertifikat zugeordneten kryptographischen Schlüsselpaares verschlüsselter Hashwert. Die Besonderheit einer solchen Signatur besteht darin, dass deren Urheberschaft und Zugehörigkeit zu einer bestimmten Person oder Instanz durch jeden Dritten geprüft werden kann.

Unter einer digitalen Signatur wird hier auch ein digitales Siegel verstanden, welches nicht einer natürlichen Person, sondern einer juristischen Person zugeordnet ist. Ein digitales Siegel dient somit nicht der Abgabe einer Willenserklärung einer einzelnen Person, sondern einer Institution als Herkunftsnachweis. Es kann somit den Ursprung und die Unversehrtheit digitaler Dokumente sicherstellen und nachweisen, dass diese von einer bestimmten juristischen Person stammen.

Unter einer "verschlüsselten Ende-zu-Ende-Verbindung" bzw. einem "verschlüsselten Ende-zu-Ende-Übertragungskanal" wird hier eine Verbindung zwischen einem Sender und einem Empfänger mit einer Ende-zu-Ende-Verschlüsslung verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, sodass Zwischenstationen aufgrund der Verschlüsslung keine Kenntnis vom Inhalt der übertragenen Daten erlagen können. Die Verbindung wird durch die Verschlüsselung kryptografisch abgesichert, um ein Ausspähen und/oder eine Manipulation der Übertragung zu verhindern, wobei hierzu ein sogenanntes Secure-Messaging-Verfahren eingesetzt werden kann. Eine Ende-zu-Ende-Verschlüsslung beruht beispielsweise auf zwei symmetrischen kryptographischen Schlüsseln, wobei ein erster der symmetrischen Schlüssel zum Verschlüsseln von Nachrichten und ein zweiter der symmetrischen Schlüssel zum Authentifizieren des Senders der Nachricht dient.

Ein Schlüssel zum Authentifizieren eines Senders einer Nachricht im Zuge eines Secure-Messaging-Verfahrens kann beispielsweise zum Erstellen eines Nachrichtenauthentifizierungscodes (Message Authentication Code, MAC) dienen. Mittels eines MAC lässt sich Gewissheit über den Ursprung der Nachrichten erhalten und deren Integrität verifizieren. MAC-Algorithmen erfordern zwei Eingabeparameter, erstens die zu schützenden Daten und zweitens einen geheimen Schlüssel. Aus diesen beiden wird ein Nachrichtenauthentifizierungscode in Form einer Prüfsumme berechnet. Der Sender einer Nachricht berechnet für die zu übermittelnden Daten der Nachricht einen MAC und sendet die Nachricht zusammen mit dem MAC an den Empfänger. Der Empfänger berechnet den MAC zu der empfangenen Nachricht mit seinem Schlüssel und vergleicht den berechneten MAC mit dem empfangenen MAC. Aus einer Übereinstimmung beider Werte folgt, dass die Nachricht von einer Partei abgeschickt wurde, welche Zugriff auf den geheimen Schlüssel besitzt, und dass die Nachricht während der Übertragung nicht verändert wurde.

Nach Ausführungsformen ist ein Signaturprüfschlüssel des Prüfcomputersystems zum Prüfen der Signatur des zweiten Eintrags in der Blockchain eingetragen. Ausführungsformen können den Vorteil haben, dass der Blockchain-Sever, beispielsweise im Zuge des Ausführens des Smart-Contracts, den Signaturprüfschlüssel zum Prüfen der Signatur des zweiten Eintrags verwenden kann. Beispielsweise ist eine erfolgreiche Signaturprüfung des zweiten Eintrags eine Voraussetzung für das Eintrag des zweiten Eintrags in die Blockchain.

Nach Ausführungsformen handelt es sich bei dem Signaturprüfschlüssel des Prüfcomputersystems beispielsweise um einen dem Prüfcomputersystem zugeordneten öffentlichen kryptographischen Schlüssel. Beispielsweise verwendet das Prüfcomputersystem einen privaten kryptographischen Schlüssel eines dem öffentlichen kryptographischen Schlüssel zugeordneten asymmetrischen Schlüsselpaars als Signaturschlüssel zum Signieren des zweiten Eintrags. Nach Ausführungsformen ist der Signaturprüfschlüssel in Form einer Blockchain-Adresse des Prüfcomputersystems, beispielsweise eines Hashwerts des öffentlichen kryptographischen Schlüssels, in der Blockchain gespeichert. Beispielsweise wird der entsprechende öffentliche kryptographische Schlüssel zum Prüfen der Signatur von dem Prüfcomputersystem an den Blockchain-Sever gesendet, der dessen Authentizität beispielsweise durch Vergleich mit der in der Blockchain gespeicherten Version des öffentlichen kryptographischen Schlüssels überprüfen kann. Beispielsweise erzeugt der Blockchain-Sever einen Hashwert des von dem Prüfcomputersystem empfangenen öffentlichen kryptographischen Schlüssels und vergleicht diesen mit der Blockchain-Adresse des Prüfcomputersystems.

Nach Ausführungsformen umfasst der zweite Eintrag einen Identifikator des Prüfcomputersystems. Ausführungsformen können den Vorteil haben, dass das Prüfcomputersystem anhand des Identifikators als die die Prüfung ausführende Instanz identifiziert werden kann.

Beispielsweise umfasst der zweite Eintrag keinen Identifikator des Prüfcomputersystems, wodurch das die Prüfung ausführende Computersystem anonym beliebt. Beispielsweise umfasst die Leseanfrage des Prüfcomputersystems einen Identifikator des Prüfcomputersystems, welches es dem Blockchain-Server ermöglich das Prüfcomputersystem zu identifizieren, dessen öffentlichen kryptographischen Schlüssel zu identifizieren bzw. zu verifizieren und/oder mit diesem zu kommunizieren. Allerdings wird der Identifikator des Prüfcomputersystems beispielsweise nicht in dem zweiten Eintrag gespeichert.

Nach Ausführungsformen umfasst der zweite Eintrag zum Anzeigen der Prüfung durch das Prüfcomputersystem einen aktualisierten Wert eines Prüfzählers. Beispielsweise handelt es sich bei dem Prüfzähler um eine natürliche Zahl, welche bei jeder Aktualisierung inkrementiert wird, beispielsweise um den Wert 1.

Nach Ausführungsformen umfasst ein Bestimmen des aktualisierten Werts des Prüfzählers ein Ermitteln des zuletzt in die Blockchain eingetragenen Wert des Prüfzählers und ein Inkrementieren des Prüfzählers. Beispielsweise ist dem Prüfzähler ein Identifikator zugeordnet. Beispielsweise wird ein zuletzt in die Blockchain eingetragenen Wert des Prüfzählers mit demselben Identifikator ausgelesen und um den Wert 1 erhöht.

Nach Ausführungsformen wird der aktualisierte Wert des Prüfzählers durch den ersten Blockchain-Server bestimmt, wobei der zuletzt in die Blockchain eingetragenen Wert des Prüfzählers von dem ersten Blockchain-Server aus der Blockchain ausgelesen wird.

Nach Ausführungsformen wird der aktualisierte Wert des Prüfzählers durch das Prüfcomputersystem bestimmt, wobei der zuletzt in die Blockchain eingetragenen Wert des Prüfzählers in einem Speicher des Prüfcomputersystems gespeichert ist. Beispielsweise ist der Prüfzähler dem Prüfcomputersystem zugeordnet und zählt die Anzahl der von dem Prüfcomputersystem ausgeführten Dokumentenprüfungen.

Nach Ausführungsformen wird der aktualisierte Wert des Prüfzählers durch das Prüfcomputersystem bestimmt, wobei der Blockchain-Server eine Leseanfrage zum Auslesen des zuletzt in die Blockchain eingetragenen Werts des Prüfzählers von dem Prüfcomputersystem über das Netzwerk empfängt, den zuletzt in die Blockchain eingetragenen Wert des Prüfzählers von dem ersten Blockchain-Server aus der Blockchain ausliest und den ausgelesenen zuletzt in die Blockchain eingetragenen Wert des Prüfzählers über das Netzwerk an das Prüfcomputersystem sendet.

Nach Ausführungsformen ist der Prüfzähler dem Prüfcomputersystem zugeordnet und zählt die Anzahl der von dem Prüfcomputersystem ausgeführten Dokumentenprüfungen. Beispielsweise handelt es sich bei dem dem Prüfzähler zugeordneten Identifikator um den Identifikator des Prüfercomputersystems.

Nach Ausführungsformen ist der Prüfzähler dem digitalen Dokument zugeordnet und zählt die Anzahl der Prüfungen, welche das digitale Dokument zum Gegenstand haben. Beispielsweise handelt es sich bei dem dem Prüfzähler zugeordneten Identifikator um den Identifikator des digitalen Dokuments.

Nach Ausführungsformen umfasst der zweite Eintrag einen Identifikator des digitalen Dokuments.

Nach Ausführungsformen umfasst der zweite Eintrag keinen Identifikator des digitalen Dokuments. Ausführungsformen können den Vorteil haben, dass der zweite Eintrag und mithin die Prüfung nicht dem digitalen Dokument zugeordnet werden kann. Mithin kann, insbesondere von dem Aussteller des Dokuments, die Verwendung des digitalen Dokuments nicht nachvollzogen werden. Es wird mithin eine anonyme Verwendung des digitalen Dokuments ermöglicht.

Beispielsweise umfasst die Leseanfrage des Prüfcomputersystems einen Identifikator des digitalen Dokuments, welcher es dem Blockchain-Server ermöglich den angefragten Hash-wert bzw. den den angefragten Hashwert umfassenden Blockchain-Eintrag zu identifizieren und dem Prüfcomputersystem bereitzustellen. Allerdings wird der Identifikator des digitalen Dokuments beispielsweise nicht in dem zweiten Eintrag gespeichert.

Nach Ausführungsformen umfasst der zweite Eintrag eine Transaktion einer Ausstellungsgebühr einer Kryptowährung von einer dem Prüfer zugeordneten Blockchain-Adresse an eine dem Aussteller des digitalen Dokuments zugeordnete Blockchain-Adresse. Ausführungsformen können den Vorteil haben, dass der Aussteller für jede Prüfung des digitalen Dokuments, welche auf seiner Verifikation der von dem digitalen Dokument umfassten Angaben beruht, eine Ausstellungsgebühr empfängt. Beispielsweise muss der Aufwand einer Verifikation der Angaben des digitalen Dokuments nur einmalig durch den Aussteller erfolgen. Für diesen Aufwand wird der Aussteller beispielsweise in Form der Ausstellungsgebühr durch den Nutznießer der Verifikation, d.h. den Prüfer des digitalen Dokuments, welcher sich auf die Verifikation durch den Aussteller stützen kann, entschädigt.

Durch die Transaktion kann ein Kick-back implementiert werden. Ein Kick-back bezeichnet hier eine Rückerstattung eines Teils eines von einem ersten Beteiligten (Aussteller) erbrachten Aufwands gegenüber einem zweiten Beteiligten (Dokumenteninhaber) durch einen dritten Beteiligten (Prüfcomputersystem), welcher Nutzen aus dem von dem ersten Beteiligten erbrachten Aufwand zieht.

Ein Prüfer eines digitalen Dokuments, beispielsweise eines abgeleiteten digitalen ID-Dokuments, akzeptiert das von einem anderen Aussteller verifizierte und herausgegebene digitale Dokument und bezahlt dafür eine Gebühr an den Aussteller, d.h. eine Ausstellungsgebühr. Dadurch spart der Prüfer beispielsweise Prüfaufwand und Prüfkosten, da er seine Prüfung auf die Verifikation der Angaben des digitalen Dokuments durch den Aussteller stützen kann. Zugleich wird der Mehraufwand des Ausstellers bei der Verifikation der Angaben durch die gezahlte Gebühr kompensiert.

Insbesondere ist die Transaktion von dem Prüfcomputersystem signiert. Anhand der Transaktion kann der Aussteller beispielsweise ermitteln, wer ein von ihm ausgestelltes digitales Dokument geprüft hat, nicht aber welches. Beispielsweise umfasst die Blockchain keine Angaben, welche das Prüfcomputersystem als Inhaber der die Blockchain-Adresse bzw. des der Blockchain-Adresse zugeordneten privaten kryptographischen Schlüssels identifiziert. In diesem Fall könnte der Aussteller als Empfänger der Ausstellungsgebühr noch nicht einmal ermitteln, wer eine Prüfung durchgeführt hat. Ermitteln könnte der Aussteller nur, dass eine Prüfung eines von ihm ausgestellten (nicht näher identifizierten) digitalen Dokuments erfolgt ist.

Beispielsweise umfasst der erste Eintrag die Blockchain-Adresse des Ausstellers oder Daten, aus welchen die Blockchain-Adresse des Ausstellers ableitbar ist. Somit kann anhand des ersten Eintrags beispielsweise ermittelt werden, an welche Blockchain-Adresse die Ausstellungsgebühr zu transferieren ist.

Nach Ausführungsformen ist der von dem ersten Eintrag umfasste Hashwert des digitalen Dokuments mit einem ersten öffentlichen kryptographischen Schlüssel des Ausstellers des digitalen Dokuments verschlüsselt. Das Ausführen der Programminstruktionen des Smart Contracts durch den ersten Blockchain-Server umfasst ferner:
- Senden einer Entschlüsselungsanfrage zum Entschlüsseln des von dem ersten Eintrag umfassten verschlüsselten Hashwert des digitalen Dokuments von dem ersten Blockchain-Server über das Netzwerk an ein Ausstellercomputersystem des Ausstellers zusammen mit einer Eintragungsbestätigung über das Eintragen des zweiten Eintrags in den zusätzlichen zweiten Block der Blockchain,
- Empfangen des von dem Ausstellercomputersystem unter Verwendung eines dem ersten öffentlichen kryptographischen Schlüssel des Ausstellers zugeordneten ersten privaten kryptographischen Schlüssels entschlüsselten Hashwerts durch den Blockchain-Server über das Netzwerk zum Weiterleiten an das Prüfcomputersystem.

Ausführungsformen können den Vorteil haben, das beispielsweise sichergestellt werden kann, dass der Hashwert nur in unverschlüsselter, d.h. nutzbarer Form, zur Verfügung gestellt wird, wenn der zweite Eintrag tatsächlich in die Blockchain eingetragen wurde. So kann beispielsweise sichergestellt werden, dass an den Aussteller des digitalen Dokuments tatsächlich für jede Prüfung des von ihm ausgestellten digitalen Dokument eine Ausstellungsgebühr transferiert wird.

Nach Ausführungsformen umfasst die Entschlüsselungsanfrage den von dem ersten Eintrag umfassten verschlüsselten Hashwert des digitalen Dokuments. Da die Entschlüsselungsanfrage von dem Blockchain-Server an das Ausstellercomputersystem gesendet wird, kann dieses anhand der Entschlüsselungsanfrage beispielsweise nicht ermitteln, wer die Prüfung ausführt. Allenfalls könnte das Ausstellercomputersystem anhand des Hashwerts ermitteln welches digitale Dokument geprüft wird.

Nach Ausführungsformen ist der von dem ersten Eintrag umfasste Hashwert des digitalen Dokuments mit dem ersten öffentlichen kryptographischen Schlüssel des Ausstellers des digitalen Dokuments verschlüsselt. Bei dem von dem ersten Blockchain-Server zum Prüfen an das Prüfcomputersystem gesendeten Hashwert handelt es sich um den verschlüsselten Hashwert, dessen Entschlüsselung auf Anfrage des Prüfcomputersystems durch den Aussteller erfolgt unter der Voraussetzung des Eintragens des zweiten Eintrags in den zusätzlichen zweiten Block der Blockchain.

Beispielsweise kann das Prüfcomputersystem eine Entschlüsselungsanfrage zum Entschlüsseln des von dem ersten Eintrag umfassten verschlüsselten Hashwert des digitalen Dokuments an das Ausstellercomputersystem des Ausstellers senden. Das Ausstellercomputersystem prüft beispielsweise, ob der zweite Eintrag in die Blockchain eingetragen wurde und/oder ob eine Transaktion der Ausstellungsgebühr erfolgt ist. Beispielsweise sendet das Ausstellercomputersystem eine entsprechende Bestätigungsanfrage an einen Blockchain-Server. Der Blockchain-Server prüft, ob zweite Eintrag in die Blockchain eingetragen wurde. Ist dies der Fall, sendet der Blockchain-Server eine Eintragungsbestätigung über das Eintragen des zweiten Eintrags in den zusätzlichen zweiten Block der Blockchain an das Ausstellercomputersystem. Auf den Empfang der Eintragungsbestätigung hin, sendet das Ausstellercomputersystem beispielsweise den unter Verwendung des dem ersten öffentlichen kryptographischen Schlüssel des Ausstellers zugeordneten ersten privaten kryptographischen Schlüssels entschlüsselten Hashwert an das Prüfcomputersystem.

Nach Ausführungsformen wird zusammen mit dem verschlüsselten Hashwert der Identifikator des Ausstellers des digitalen Dokuments an den Prüfcomputersystem gesendet zum Identifizieren des Ausstellers für das Entschlüsseln des verschlüsselten Hashwerts des digitalen Dokuments. Ausführungsformen können den Vorteil haben, dass das Prüfcomputersystem beispielsweise den Aussteller des digitalen Dokuments anhand des Identifikators identifizieren kann und mithin weiß, an wenn eine Entschlüsselungsanfrage zum Entschlüsseln des verschlüsselten Hashwerts des digitalen Dokuments zu richten ist.

Nach Ausführungsformen wird zusammen mit dem verschlüsselten Hashwert des digitalen Dokuments der erste öffentlicher kryptographischer Schlüssel des Ausstellers gesendet zum Überprüfen eines von dem Aussteller bereitgestellten entschlüsselten Hashwert durch Verschlüsseln des bereitgestellten Hashwerts mit dem ersten öffentlichen kryptographischen Schlüssel und Abgleich mit dem von dem ersten Blockchain-Server gesendeten verschlüsselten Hashwert. Ausführungsformen können den Vorteil haben, dass das Prüfcomputersystem in die Lage versetzt wird überprüfen zu können, ob es sich bei dem bereitgestellten entschlüsselten Hashwert tatsächlich um die entschlüsselte Version des von dem ersten Blockchain-Server gesendeten verschlüsselten Hashwerts handelt.

Nach Ausführungsformen umfasst das digitale Dokument den Identifikator des Ausstellers, welcher beispielsweise zum Identifizieren des Ausstellers für das Entschlüsseln des verschlüsselten Hashwerts verwendet wird. Ausführungsformen können den Vorteil haben, dass das Prüfcomputersystem beispielsweise den Aussteller des digitalen Dokuments anhand des Identifikators identifizieren kann und mithin weiß, an wenn eine Entschlüsselungsanfrage zum Entschlüsseln des verschlüsselten Hashwerts des digitalen Dokuments zu richten ist.

Nach Ausführungsformen umfasst das digitale Dokument einen Datensatz mit Angaben, bei welchen es sich um Kopien von Angaben aus ein oder mehrerer von ein oder mehreren physischen Dokumenten bereitgestellten Datensätzen, von dem Aussteller des digitalen Dokuments erstellte Angaben und/oder von dem Inhaber des digitalen Dokuments erstellte Angaben handelt.

Ausführungsformen können den Vorteil haben, dass es sich bei dem digitalen Dokument beispielsweise um eine digitale Kopie eines physischen Dokuments bzw. eines von dem physischen Dokument umfassten Datensatzes handeln kann. Beispielsweise kann es sich bei dem digitalen Dokument um eine Auswahl von Angaben des physischen Dokuments bzw. des von dem physischen Dokument umfassten Datensatzes handeln. Beispielsweise kann es sich bei dem digitalen Dokument um digitale Kopien mehrerer physischer Dokumente bzw. von den physischen Dokumenten umfassten Datensätzen handeln. Beispielsweise kann es sich bei dem digitalen Dokument um eine Kombination ausgewählter Angaben physischer Dokumente bzw. der von den physischen Dokumenten umfassten Datensätzen handeln.

Beispielsweise kann das digitale Dokument Angaben, welche der Aussteller erstellt hat, umfassen, wie etwa Noten im Falle eines Zeugnisses oder Attribute des Inhabers des digitalen Dokuments, welcher der Aussteller festlegt, wie etwa firmenbezogenen Attribute im Falle eines Firmenausweises.

Beispielsweise kann das digitale Dokument Angaben, welche der Inhaber des digitalen Dokuments erstellt oder bereitstellt. Beispielsweise kann es sich hierbei um biometrische Angaben des Nutzers handeln. Ferner kann es sich beispielsweise um eine Telefonnummer oder eine E-Mail-Adresse des Inhabers des auszustellenden digitale Dokuments handeln. Eine Telefonnummer kann durch einen Testanruf oder eine Testnachricht an die entsprechende Telefonnummer verifiziert werden. Eine E-Mail-Adresse kann der Aussteller beispielsweise durch Senden einer Test-E-Mail an die angegebene E-Mail-Adresse verifizieren. Erhält der Aussteller auf seinen Testanruf, seine Testnachricht und/oder seine Test-E-Mail eine Antwort oder teilt der Inhaber dem Aussteller ein mittels des Testanrufs, der Testnachricht und/oder der Test-E-Mail übermitteltes Geheimnis, wie etwa einen Code, korrekt mit, ist die Verifikation erfolgreich.

Nach Ausführungsformen umfasst das digitale Dokument einen einem Dokumenteninhaber zugeordneten öffentlichen kryptographischen Schlüssel. Ausführungsformen können den Vorteil haben, dass es sich bei dem digitalen Dokument beispielsweise um ein digitales Zertifikat handelt.

Nach Ausführungsformen umfasst der erste Eintrag einen Identifikator des Ausstellers. Ausführungsformen können den Vorteil haben, dass der Aussteller anhand des Identifikators als Aussteller des digitalen Dokuments identifizierbar sein kann. Nach Ausführungsformen umfasst der erste Eintrag einen Identifikator des digitalen Dokuments. Ausführungsformen können den Vorteil haben, das anhand des Identifikators des digitalen Dokuments der dem entsprechenden digitale Dokument zugeordnete erste Eintrag in der Blockchain identifiziert werden kann.

Nach Ausführungsformen umfasst das Verfahren ferner ein Eintragen des digitalen Dokuments in der Blockchain im Zuge eines Ausstellens des digitalen Dokuments durch den Aussteller. Das Eintragen des digitalen Dokuments umfasst:
- Empfangen eine Eintragungsanfrage zum Eintragen des digitalen Dokuments von dem Ausstellercomputersystem des Ausstellers durch einen zweiten Blockchain-Server, wobei die Eintragungsanfrage den von einem Aussteller des digitalen Dokuments signierten Hashwert des digitalen Dokuments umfasst, wobei der Aussteller des digitalen Dokuments mit der Signatur eine erfolgreiche Verifikation ein oder mehrerer von dem digitalen Dokument umfasster Angaben bestätigt,
- Ausführen der Programminstruktionen des Smart Contracts durch den zweiten Blockchain-Server, wobei ein Ausführen der Programminstruktionen des Smart Contracts ein Prüfen der Signatur des Hashwerts umfasst, wobei auf eine erfolgreiche Prüfung der Signatur des Hashwerts hin der erste Eintrag erstellt und in dem ersten Block der Blockchain eingetragen wird.

Nach Ausführungsformen handelt es sich bei dem ersten und dem zweiten Blockchain-Server um denselben Blockchain-Server. Nach Ausführungsformen handelt es sich bei dem ersten und dem zweiten Blockchain-Server um verschiedene Blockchain-Server.

Nach Ausführungsformen ist ein zweiter öffentlicher kryptographischer Schlüssel des Ausstellers als Signaturprüfschlüssel zum Prüfen der Signatur des Ausstellers in der Blockchain eingetragen ist. Nach Ausführungsformen ist der erste öffentliche kryptographische Schlüssel des Ausstellers identisch mit dem zweiten öffentlichen kryptographischen Schlüssel des Ausstellers. Nach Ausführungsformen ist der erste öffentliche kryptographische Schlüssel des Ausstellers verschieden von dem zweiten öffentlichen kryptographischen Schlüssel des Ausstellers.

Nach Ausführungsformen ist der zweite öffentliche kryptographische Schlüssel des Ausstellers in dem ersten Eintrag in dem ersten Block der Blockchain eingetragen und/oder in einem weiteren Eintrag eines weiteren Blocks der Blockchain, wobei es sich bei dem weiteren Eintrag um eine Registrierungseintrag zum Registrieren des Ausstellers in der Blockchain handelt.

Nach Ausführungsformen erfolgt ein Eintragen des zweiten öffentlichen kryptographischen Schlüssels des Ausstellers als Signaturprüfschlüssel im Zuge eines Registrierens des Ausstellers in der Blockchain. Beispielsweise können nur registrierte Aussteller Hashwerten von Dokumenten in die Blockchain eintragen.

Ausführungsformen umfassen ferner einen Blockchain-Server zum Prüfen der Gültigkeit eines digitalen Dokuments unter Verwendung einer Blockchain, welche der Blockchain-Server verwaltet und welcher ein Smart Contract mit ersten Programminstruktionen zugeordnet ist. Der Blockchain-Server umfasst einen Prozessor, einen Speicher mit zweiten Programminstruktionen und einen Kommunikationsschnittstelle zur Kommunikation über ein Netzwerk. Ein Ausführen der zweiten Programminstruktionen durch den Prozessor veranlasst den Prozessor dazu den Blockchain-Server zum Ausführen eines Verfahrens zum Verifizieren des digitalen Dokuments zu steuern.

Das Verfahren umfasst:
- Empfangen einer Leseanfrage zum Auslesen des Hashwerts des digitalen Dokuments aus der Blockchain durch einen ersten Blockchain-Server von einem das digitale Dokument prüfenden Prüfcomputersystem über das Netzwerk unter Verwendung der Kommunikationsschnittstelle,
- Ausführen der ersten Programminstruktionen des Smart Contracts durch den ersten Blockchain-Server, wobei ein Ausführen der ersten Programminstruktionen des Smart Contracts ein Eintragen eines von dem Prüfcomputersystem signierten zweiten Eintrags in einen zusätzlichen zweiten Block der Blockchain umfasst, wobei der zweite Eintrag eine Prüfung durch das Prüfcomputersystem anzeigt,
- auf das Eintragen des zweiten Eintrags in den zusätzlichen zweiten Block der Blockchain hin, Senden des von dem ersten Eintrag umfassten Hashwerts des digitalen Dokuments an das Prüfcomputersystem durch den ersten Blockchain-Server über das Netzwerk unter Verwendung der Kommunikationsschnittstelle zum Prüfen eines vom dem Prüfcomputersystem für das zu prüfende digitale Dokument berechneten Hashwerts, wobei das zu prüfende digitale Dokument von dem Prüfcomputersystem als gültig anerkannt wird, falls der von dem ersten Blockchain-Server gesendete Hashwert mit dem von dem Prüfcomputersystem für das zu prüfende digitale Dokument berechneten Hashwert übereinstimmt.

Nach Ausführungsformen ist der Blockchain-Server dazu konfiguriert jede der vorgenannten Ausführungsformen des Verfahrens zum Prüfen der Gültigkeit des digitalen Dokuments unter Verwendung einer Blockchain auszuführen.

Nach Ausführungsformen veranlasst ein Ausführen der zweiten Programminstruktionen durch den Prozessor den Prozessor dazu den Blockchain-Server zum Eintragen des digitalen Dokuments in der Blockchain im Zuge eines Ausstellens des digitalen Dokuments durch den Aussteller zu steuern.

Das Eintragen des digitalen Dokuments umfasst:
- Empfangen eine Eintragungsanfrage zum Eintragen des digitalen Dokuments von dem Ausstellercomputersystem des Ausstellers durch einen Blockchain-Server, wobei die Eintragungsanfrage den von einem Aussteller des digitalen Dokuments signierten Hashwert des digitalen Dokuments umfasst, wobei der Aussteller des digitalen Dokuments mit der Signatur eine erfolgreiche Verifikation ein oder mehrerer von dem digitalen Dokument umfasster Angaben bestätigt,
- Ausführen der ersten Programminstruktionen des Smart Contracts durch den Blockchain-Server, wobei ein Ausführen der ersten Programminstruktionen des Smart Contracts ein Prüfen der Signatur des Hashwerts umfasst, wobei auf eine erfolgreiche Prüfung der Signatur des Hashwerts hin der erste Eintrag erstellt und in dem ersten Block der Blockchain eingetragen wird.

Im Weiteren werden Ausführungsformen der Erfindung mit Bezugnahme auf die Zeichnungen näher erläutert. Es zeigen:
- Figur 1: ein schematisches Blockdiagramm einer Ausführungsform eines exemplarischen Systems zum Prüfen eines digitalen Dokuments,
- Figur 2: ein schematisches Flussdiagramm einer Ausführungsform eines exemplarischen Verfahrens zum Prüfen eines digitalen Dokuments,
- Figur 3: ein schematisches Flussdiagramm einer Ausführungsform eines exemplarischen Verfahrens zum Prüfen eines digitalen Dokuments,
- Figur 4: ein schematisches Flussdiagramm einer Ausführungsform eines exemplarischen Verfahrens zum Prüfen eines digitalen Dokuments und
- Figur 5: ein schematisches Flussdiagramm einer Ausführungsform eines exemplarischen Verfahrens zum Eintragen eines Hashwerts eines digitalen Dokuments.

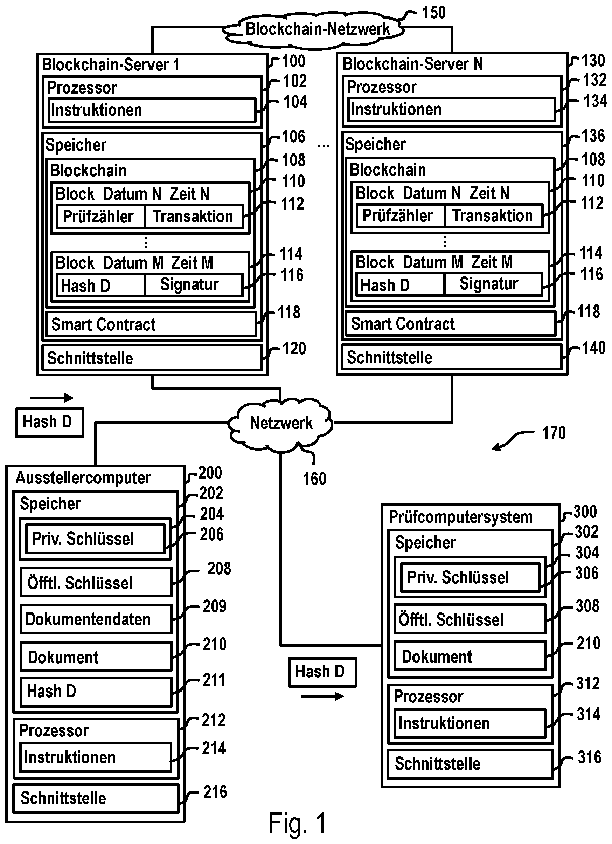

Figur 1 zeigt ein exemplarisches System 170 zum Prüfen eines digitalen Dokuments 210 unter Verwendung einer Blockchain 108. Die Blockchain 108 wird von einem Blockchain-Netzwerk 150 bereitgestellt, welches ein oder mehrere Blockchain-Server 100, 130 umfasst, welche jeweils die Blockchain 108 verwalten. Die Blockchain-Server 100, 130 umfassen beispielsweise jeweils einen Prozessor 102, 132, welcher Programminstruktionen 104, 134 ausführt. Durch ein Ausführen der Programminstruktionen 104, 134 wird der Prozessor 102, 132 beispielsweise dazu veranlasst ein Verfahren zum Prüfen der Gültigkeit des digitalen Dokuments 210 auszuführen. Die Blockchain-Server 100, 130 umfassen ferner jeweils eine Kommunikationsschnittstelle 120, 140 zur Kommunikation über ein Netzwerk 160, bei welchem es sich beispielsweise um ein Intranet oder das Internet handeln kann. Ferner umfasst das System 170 beispielsweise ein Ausstellercomputersystem 200 eines Ausstellers des digitalen Dokuments 210 und ein Prüfcomputersystem 300, welches die Gültigkeit des digitalen Dokuments 210 prüft. Eine Kommunikation zwischen den Blockchain-Servern 100, 130 und dem Ausstellercomputersystem 200 bzw. dem Prüfcomputersystem 300, ebenso wie eine eventuelle Kommunikation zwischen Ausstellercomputersystem 200 und Prüfcomputersystem 300 erfolgt beispielsweise jeweils verschlüsselt, beispielsweise unter Verwendung einer Ende-zu-Ende-Verschlüsselung.

Die Blockchain 108 umfasst eine Mehrzahl von Blöcken 110, 114 welche jeweils ein oder mehrere Einträge 112, 116 umfassen. Beispielsweise weisen die Blöcke 110, 114 der Blockchain 108 jeweils einen Zeitstempel auf. Der Zeitstempel gibt beispielsweise Datum und Uhrzeit der Erstellung des entsprechenden Blocks 110, 114 an. Ein erster Block 114 der Blockchain 108 umfasst beispielsweise einen ersten Eintrag 116 mit einem Hashwert 211 des digitalen Dokuments 210. Der Hashwert 211 kann verschlüsselt oder unverschlüsselt sein. Beispielsweise ist der Hashwert 211 mit einem öffentlichen kryptographischen Schlüssel 208 des Ausstellers verschlüsselt. Ferner umfasst der erste Einträge 116 beispielsweise eine Signatur des Ausstellers des digitalen Dokuments 210. Mit der Signatur bestätigt der Aussteller eine erfolgreiche Verifikation ein oder mehrerer von dem digitalen Dokument 210 umfassten Angaben 209. Beispielsweise bestätigt der Aussteller mit der Signatur eine erfolgreiche Verifikation aller von dem digitalen Dokument 210 umfassten Angaben 209. Der signierte Hashwert 211 wird von dem Ausstellercomputersystem im Zuge eines Eintragungsverfahrens zum Eintragen des Hashwert 211 in die Blockchain 108 an einen der Blockchain-Server 100, 130 des Blockchain-Netzwerks 150 gesendet. Der Blockchain 108 ist beispielsweise ein Smart Contract 118 mit Programminstruktionen zugeordnet. Beispielsweise kann der Smart Contract 118 unabhängig von der Blockchain 108 gespeichert sein, in der Blockchain 108 gespeichert sein und/oder ein Hashwert des Smart Contracts 118 kann in der Blockchain 108 gespeichert sein. Der empfangende Blockchain-Server 100, 130 führt auf ein Empfangen einer Eintragungsanfrage zum Eintragen des Hashwerts 211 des digitalen Dokuments 210 beispielsweise den Smart Contract 118 aus, prüft beispielsweise die Signatur des Hashwerts 211 und trägt diesen auf eine erfolgreiche Signaturprüfung hin in die Blockchain 108, genauer gesagt in den Eintrag 116 des Blocks 114 ein. Zum Prüfen der Gültigkeit des digitalen Dokuments 210 sendet das Prüfungscomputersystem 300 beispielsweise eine Leseanfrage zum Auslesen des in dem Eintrag 116 der Blockchain 108 gespeicherten Hashwert 211 des digitalen Dokuments 210 über das Netzwerk 160 an einen der Blockchain-Server 100, 130 des Blockchain-Netzwerks 150. Der empfangende Blockchain-Server 100, 130 führt auf ein Empfangen der Leseanfrage beispielsweise den Smart Contract 118 aus, prüft beispielsweise die Leseanfrage und trägt den zweiten Eintrag 112 in den einen zusätzlichen zweiten Block 110 der Blockchain 108. Der Eintrag 112 zeigt die Prüfung an und umfasst beispielsweise eine Prüfzähler und/oder eine Transaktion einer Ausstellungsgebühr von dem Prüfcomputersystem bzw. einer dem Prüfcomputersystem 300 zugeordneten Blockchain-Adresse an den Aussteller bzw. eine dem Ausstellercomputersystem 200 zugeordnete Blockchain-Adresse. Auf ein Eintragen des zweiten Eintrags 112 in die Blockchain 108 hin liest der Blockchain-Server 100, 130 den angefragten Hashwert 211 des digitalen Dokuments 210 aus dem ersten Eintrag 116 der Blockchain 108 und sendet diesen über das Netzwerk 160 an das anfragende Prüfcomputersystem 300.

Das Ausstellercomputersystem 200 umfasst beispielsweise einen Prozessor 212 zum Ausführen von Programminstruktionen 214, einen Speicher 202 sowie eine Kommunikationsschnittstelle 216 zur Kommunikation über das Netzwerk 160. Ein Ausführen der Programminstruktionen 214 durch den Prozessor 212 veranlasst den Prozessor 212 beispielsweise dazu aus einem digitalen Datensatz mit verifizierten Dokumentendaten 209 ein digitales Dokument 210 zu erstellen und einen Hashwert 211 des digitales Dokument 210 zu berechnen. Den Hashwert 211 signiert das Ausstellercomputersystem 200 unter Verwendung eines beispielsweise in einem geschützten Speicherbereich 204 des Speichers 202 gespeicherten privaten kryptographischen Schlüssels 206 eines asymmetrischen Schlüsselpaars des Ausstellercomputersystem 200. Das asymmetrische Schlüsselpaar des Ausstellercomputersystem 200 umfasst ferner einen öffentlichen kryptographischen Schlüssel 208, welcher als Signaturprüfschlüssel zum Prüfen von mit dem privaten kryptographischen Schlüssels 206 erstellten Signaturen dient. Der öffentlichen kryptographischen Schlüssel 208 kann ferner zum Verschlüsseln des Hashwerts 211 verwendet werden. Die resultierende Verschlüsselung kann mit dem privaten kryptographischen Schlüssels 206, beispielsweise auf Anfrage, von dem Ausstellercomputersystem 200 wieder entschlüsselt werden. Alternativer Weise kann das Ausstellercomputersystem ein zweites asymmetrisches Schlüsselpaar mit einem zweiten öffentlichen kryptographischen Schlüssel und einem zweiten privaten kryptographischen Schlüssel zum Verschlüsseln bzw. Entschlüsseln des Hashwerts 211 umfassen. Der zweite private kryptographische Schlüssel ist beispielsweise ebenfalls in dem geschützten Speicherbereich 204 des Speichers 202 gespeichert.

Das Prüfcomputersystem 300 umfasst beispielsweise einen Prozessor 312 zum Ausführen von Programminstruktionen 314, einen Speicher 302 sowie eine Kommunikationsschnittstelle 316 zur Kommunikation über das Netzwerk 160. Ein Ausführen der Programminstruktionen 314 durch den Prozessor 312 veranlasst den Prozessor 312 beispielsweise dazu eine Leseanfrage zum Auslesen des in der Blockchain 108 gespeicherten Hashwerts 211 des digitalen Dokuments 210 zu erzeugen und über das Netzwerk 160 an einen der Blockchain-Server 100, 130 zu senden. In Antwort auf die Leseanfrage empfängt das Prüfcomputersystem 300 beispielsweise den in dem Eintrag 116 der Blockchain 108 gespeicherten Hashwert 211. Das Prüfcomputersystem 300 berechnet einen Hashwert des zu prüfenden digitalen Dokument 210 und vergleicht diesem mit dem empfangenen Hashwert 211 aus der Blockchain 108. Stimmen beide überein wird das digitale Dokument 210 von dem Prüfcomputersystem 300 als gültig akzeptiert. Ferner umfasst das Prüfcomputersystem 300 einen in einem geschützten Speicherbereich 304 des Speichers 302 gespeicherten privaten kryptographischen Schlüssels 306 zum Signieren, beispielsweise des zweiten Eintrags 112 oder von Elementen des zweiten Eintrags 112, wie etwa dem Prüfzähler und/oder der Transaktion der Ausstellungsgebühr. Der private kryptographische Schlüssels 306 gehört zu einem asymmetrischen Schlüsselpaar des Prüfcomputersystems 300, welches ferner einen öffentlichen kryptographischen Schlüssel 308 umfasst, der als Signaturprüfschlüssel zum Prüfen von mit dem privaten kryptographischen Schlüssels 306 erstellten Signaturen dient.

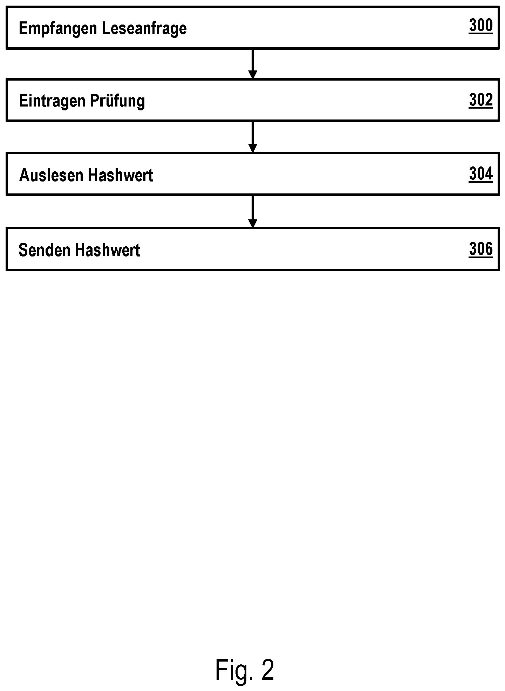

Figur 2 zeigt ein exemplarisches Verfahren zum Prüfen eines digitalen Dokuments unter Verwendung einer Blockchain. In Block 300 empfängt ein Blockchain-Server von einem das digitale Dokument prüfenden Prüfcomputersystem eine Leseanfrage über ein Netzwerk. Die Leseanfrage fragt ein Auslesen eines Hashwerts des digitalen Dokuments an. Beispielsweise umfasst die Leseanfrage einen Identifikator des Dokuments zum Identifizieren eines dem digitalen Dokument zugeordneten ersten Eintrags in der Blockchain, in welchem der Hashwert gespeichert ist. Bei dem Identifikator des digitalen Dokuments kann es sich beispielsweise um den Hashwert selber handeln oder um einen von dem Hashwert verschiedenen Identifikator. Beispielsweise umfasst die Leseanfrage ferner einen von dem Prüfcomputersystem signierten zweiten Eintrag, welcher eine Prüfung anzeigt. Beispielsweise umfasst der zweite Eintrag eine Transaktion einer Ausstellungsgebühr einer Kryptowährung von einer dem Prüfer zugeordneten Blockchain-Adresse an eine dem Aussteller des digitalen Dokuments zugeordnete Blockchain-Adresse. Beispielsweise umfasst der zweite Eintrag einen aktualisierten Wert eines Prüfzählers. Beispielsweise sieht der Smart Contract für ein Eintragen eines aktualisierten Werts des Prüfzählers eine Entrichtung einer Gebühr in Höhe der Ausstellungsgebühr durch die die Eintragung anfragende Entität an den Aussteller vor. Der Prüfzähler ist beispielsweise dem Prüfcomputersystem zugeordnet und zählt die Anzahl der von dem Prüfcomputersystem ausgeführten Dokumentenprüfungen oder der Prüfzähler ist beispielsweise dem digitalen Dokument zugeordnet und zählt die Anzahl der Prüfungen, welche das digitale Dokument zum Gegenstand haben.

Auf den Empfang der Leseanfrage hin führt der Blockchain-Server beispielsweise Programminstruktionen eines der Blockchain und/oder dem ersten Eintrag zugeordneten Smart Contracts aus. Das Ausführen der Programminstruktionen des Smart Contracts veranlasst den Blockchain-Server beispielsweise dazu in Block 302 den zweiten Eintrag in die Blockchain eingetragen. Voraussetzung für die Eintragung ist beispielsweise eine erfolgreiche Signaturprüfung der Signatur des zweiten Eintrags. Ferner erfolgt beispielsweise eine Konsistenzprüfung des zweiten Eintrags, etwa ob dieser eine Transaktion und/oder einen aktualisierten Wert des Prüfzählers umfasst. In Block 304 wird auf das Eintragen des zweiten Eintrags in die Blockchain hin der in dem ersten Eintrag gespeicherte Hashwert des digitalen Dokuments ausgelesen und dem Prüfcomputersystem in Block 306 über das Netzwerk zugesendet.

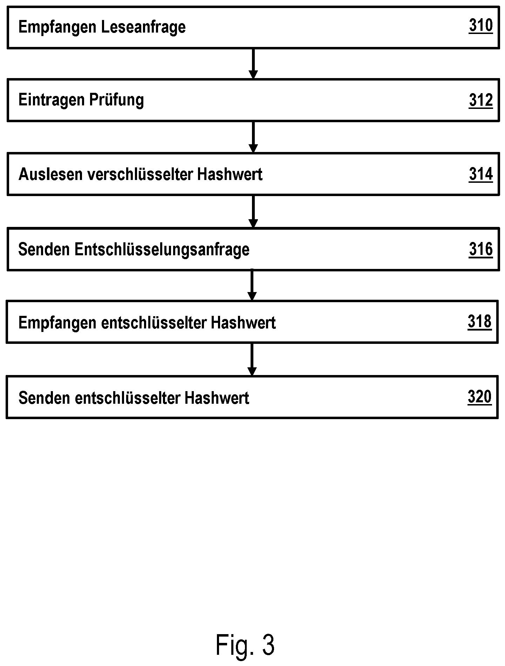

Figur 3 zeigt ein exemplarisches Verfahren zum Prüfen eines digitalen Dokuments unter Verwendung einer Blockchain. Die Blöcke 310 bis 314 entsprechen beispielsweise den Blöcke 300 bis 304 der Figur 2. Im Unterschied zu dem Verfahren in Figur 2, ist der in dem ersten Eintrag der Blockchain gespeicherte Hashwert im Falle der Figur 3 mit einem öffentlichen Schlüssel des Ausstellers verschlüsselt. Somit wird in Block 314 der verschlüsselte Hashwert ausgelesen. In Block 316 sendet der Blockchain-Server eine Entschlüsselungsanfrage zum Entschlüsseln des von dem ersten Eintrag umfassten verschlüsselten Hashwerts des digitalen Dokuments über das Netzwerk an ein Ausstellercomputersystem des Ausstellers. Beispielsweise wird die Entschlüsselungsanfrage zusammen mit einer Eintragungsbestätigung über das Eintragen des zweiten Eintrags in Block 312 in die Blockchain gesendet. Das Ausstellercomputersystem prüft beispielsweise die Eintragungsbestätigung und entschlüsselt auf eine erfolgreiche Prüfung hin den verschlüsselten Hashwert. In Block 318 empfängt der Blockchain-Server über das Netzwerk den von dem Ausstellercomputersystem unter Verwendung eines dem ersten öffentlichen kryptographischen Schlüssel des Ausstellers zugeordneten ersten privaten kryptographischen Schlüssels entschlüsselten Hashwert. In Block 320 leitet der Blockchain-Server den entschlüsselten Hashwert an das das Prüfcomputersystem weiter.

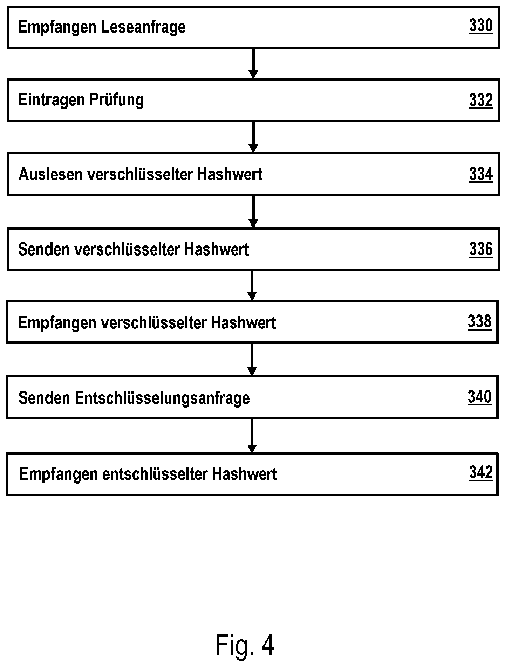

Figur 4 zeigt ein exemplarisches Verfahren zum Prüfen eines digitalen Dokuments unter Verwendung einer Blockchain. Die Blöcke 330 bis 334 entsprechen beispielsweise den Blöcke 310 bis 314 der Figur 3. Wie im Fall der Figur 3, ist auch im Fall der Figur 4 der in dem ersten Eintrag der Blockchain gespeicherte Hashwert mit dem öffentlichen Schlüssel des Ausstellers verschlüsselt. Allerdings wird im Fall der Figur 4 die Entschlüsselung des Hashwerts von dem Prüfcomputersystem initiiert im Gegenteil zu dem Fall der Figur 3, in dem das Entschlüsseln durch den Blockchain-Server initiiert wird. In Block 336 sendet der Blockchain-Server den verschlüsselten Hashwert über das Netzwerk an das Prüfcomputersystem, welchen das Prüfcomputersystem in Block 338 empfängt. In Block 340 sendet das Prüfcomputersystem eine Entschlüsselungsanfrage zum Entschlüsseln des von dem Blockchain-Server verschlüsselten Hashwerts des digitalen Dokuments über das Netzwerk an das Ausstellercomputersystem des Ausstellers. Beispielsweise wird die Entschlüsselungsanfrage zusammen mit einer Eintragungsbestätigung über das Eintragen des zweiten Eintrags in Block 332 in die Blockchain gesendet. Die entsprechende Eintragungsbestätigung empfängt das Prüfcomputersystem von dem Blockchain-Server beispielsweise zusammen mit dem verschlüsselten Hashwert in Block 338 empfangen. Alternativ kann das Ausstellercomputersystem auf den Empfang der in Block 340 von dem Prüfcomputersystem gesendeten Entschlüsselungsanfrage eine Anfrage an den Blockchain-Server nach einer Eintragungsbestätigung der Eintragung des zweiten Eintrags senden. Das Ausstellercomputersystem prüft beispielsweise die Eintragungsbestätigung und entschlüsselt auf eine erfolgreiche Prüfung hin den verschlüsselten Hashwert. In Block 342 empfängt das Prüfcomputersystem über das Netzwerk den von dem Ausstellercomputersystem unter Verwendung eines dem ersten öffentlichen kryptographischen Schlüssel des Ausstellers zugeordneten ersten privaten kryptographischen Schlüssels entschlüsselten Hashwert.

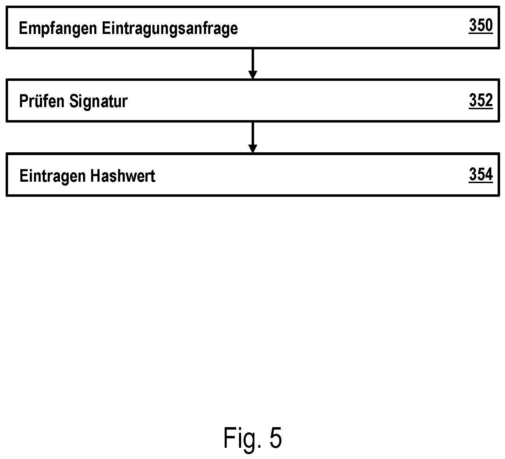

Figur 5 zeigt ein exemplarisches Verfahren zum Eintragen eines Hashwerts eines digitalen Dokuments unter Verwendung einer Blockchain. In Block 350 empfängt der Blockchain-Server ein Eintragungsanfrage des Ausstellers bzw. des Ausstellercomputersystems über das Netzwerk zum Eintragen des digitalen Dokuments. Die Eintragungsanfrage umfasst den von einem Aussteller des digitalen Dokuments signierten Hashwert des digitalen Dokuments. Mit der Signatur bestätigt der Aussteller des digitalen Dokuments eine erfolgreiche Verifikation ein oder mehrerer von dem digitalen Dokument umfasster Angaben. Auf das Empfangen der Eintragungsanfrage hin führt der Blockchain-Server beispielsweise Programminstruktionen des Smart Contracts aus. Das Ausführen der Programminstruktionen des Smart Contracts veranlasst den Blockchain-Server beispielsweise in Block 352 die Signatur des Hashwerts zu prüfen. Der zur Prüfung verwendete Signaturprüfschlüssel, etwa ein öffentlicher kryptographischer Schlüssel des Ausstellers ist beispielsweise in den Blockchain gespeichert. Beispielsweise erfolgt eine entsprechende Speicherung des Signaturprüfschlüssel im Zuge eines Registrierens des Ausstellers als ein zum Eintragen von Hashwerten in die Blockchain berechtigter Aussteller. Beispielsweise ist eine solche Registrierung mit Eintragung des Signaturprüfschlüssels Voraussetzung dafür, dass der Aussteller den Hash-wert des digitalen Dokuments in die Blockchain eintragen darf, d.h. dass der Blockchain-Server eine entsprechende Eintragungsanfrage ausführt. In Block 354 wird der Hashwert auf eine erfolgreiche Prüfung der Signatur des Hashwerts hin ein Eintrag mit dem signierten Hashwert erstellt und in einen Block eingetragen, welcher der Blockchain hinzugefügt wird. Beispielsweise kann der Hashwert unverschlüsselt oder mit einem öffentlichen kryptographischen Schlüssel des Ausstellers verschlüsselt in die Blockchain eingetragen werden. Bei dem entsprechenden öffentlichen kryptographischen Schlüssel kann es sich beispielsweise um den Signaturprüfschlüssel des Ausstellers handeln oder um einen von dem Signaturprüfschlüssel des Ausstellers verschiedenen weiteren öffentlichen kryptographischen Schlüssel des Ausstellers.

### Bezugszeichenliste

- 100: Blockchain-Server
- 102: Prozessor
- 104: Programminstruktionen
- 106: Speicher
- 108: Blockchain
- 110: Block
- 112: Eintrag
- 114: Block
- 116: Eintrag
- 118: Smart Contract
- 120: Kommunikationsschnittstelle
- 130: Blockchain-Server
- 132: Prozessor
- 134: Programminstruktionen
- 136: Speicher
- 140: Kommunikationsschnittstelle
- 150: Blockchain-Netzwerk
- 160: Netzwerk
- 170: System
- 200: Ausstellercomputersystem
- 202: Speicher
- 204: geschützter Speicherbereich
- 206: privater kryptographischer Schlüssel
- 208: öffentlicher kryptographischer Schlüssel
- 209: digitale Dokumentendaten
- 210: digitales Dokument
- 211: Hashwert
- 212: Prozessor
- 214: Programminstruktionen
- 216: Kommunikationsschnittstelle
- 300: Prüfcomputersystem
- 302: Speicher
- 304: geschützter Speicherbereich
- 306: privater kryptographischer Schlüssel
- 308: öffentlicher kryptographischer Schlüssel
- 312: Prozessor
- 314: Programminstruktionen
- 316: Kommunikationsschnittstelle

## Patentansprüche

1. Verfahren zum Prüfen der Gültigkeit eines digitalen Dokuments (210) unter Verwendung einer Blockchain (108), welcher ein Smart Contract (118) mit Programminstruktionen zugeordnet ist,
wobei ein erster Block (114) der Blockchain (108) einen dem digitalen Dokument (210) zugeordneten ersten Eintrag (116) umfasst, wobei der erste Eintrag (116) einen von einem Aussteller des digitalen Dokuments (210) signierten Hashwert (211) des digitalen Dokuments (210) umfasst, wobei der Aussteller des digitalen Dokuments (210) mit der Signatur eine erfolgreiche Verifikation ein oder mehrerer von dem digitalen Dokument (210) umfasster Angaben (209) bestätigt,
wobei das Verfahren umfasst:
• Empfangen einer Leseanfrage zum Auslesen des Hashwerts (211) des digitalen Dokuments (210) aus der Blockchain (108) durch einen ersten Blockchain-Server (100, 130) von einem das digitale Dokument (210) prüfenden Prüfcomputersystem (300) über ein Netzwerk (160), **dadurch gekennzeichnet, dass** das Verfahren weiterhin umfasst:
• Ausführen der Programminstruktionen des Smart Contracts (118) durch den ersten Blockchain-Server (100, 130), wobei ein Ausführen der Programminstruktionen des Smart Contracts (118) ein Eintragen eines von dem Prüfcomputersystem (300) signierten zweiten Eintrags (112) in einen zusätzlichen zweiten Block (110) der Blockchain (108) umfasst, wobei der zweite Eintrag (112) eine Prüfung durch das Prüfcomputersystem (300) anzeigt,
• auf das Eintragen des zweiten Eintrags (112) in den zusätzlichen zweiten Block (110) der Blockchain (108) hin, Senden des von dem ersten Eintrag (116) umfassten Hashwerts (211) des digitalen Dokuments (210) an das Prüfcomputersystem (300) durch den ersten Blockchain-Server (100, 130) über das Netzwerk (160) zum Prüfen eines vom dem Prüfcomputersystem (300) für das zu prüfende digitale Dokument (210) berechneten Hashwerts (211), wobei das zu prüfende digitale Dokument (210) von dem Prüfcomputersystem (300) als gültig anerkannt wird, falls der von dem ersten Blockchain-Server (100, 130) gesendete Hashwert (211) mit dem von dem Prüfcomputersystem (300) für das zu prüfende digitale Dokument (210) berechneten Hashwert (211) übereinstimmt.

2. Verfahren nach Anspruch 1, wobei ein Signaturprüfschlüssel des Prüfcomputersystems (300) zum Prüfen der Signatur des zweiten Eintrags (112) in der Blockchain (108) eingetragen ist.

3. Verfahren nach einem der vorangehenden Ansprüche, wobei der zweite Eintrag (112) einen Identifikator des Prüfcomputersystems (300) umfasst.

4. Verfahren nach einem der vorangehenden Ansprüche, wobei der zweite Eintrag (112) zum Anzeigen der Prüfung durch das Prüfcomputersystem (300) einen aktualisierten Wert eines Prüfzählers umfasst.

5. Verfahren nach Anspruch 4, wobei ein Bestimmen des aktualisierten Werts des Prüfzählers ein Ermitteln des zuletzt in die Blockchain (108) eingetragenen Wert des Prüfzählers und ein Inkrementieren des Prüfzählers umfasst.

6. Verfahren nach einem der Ansprüche 4 bis 5, wobei der Prüfzähler dem Prüfcomputersystem (300) zugeordnet ist und die Anzahl der von dem Prüfcomputersystem (300) ausgeführten Dokumentenprüfungen zählt oder wobei der Prüfzähler dem digitalen Dokument (210) zugeordnet ist und die Anzahl der Prüfungen zählt, welche das digitale Dokument (210) zum Gegenstand haben.

7. Verfahren nach einem der vorangehenden Ansprüche, wobei der zweite Eintrag (112) eine Transaktion einer Ausstellungsgebühr einer Kryptowährung von einer dem Prüfer zugeordneten Blockchain-Adresse an eine dem Aussteller des digitalen Dokuments (210) zugeordnete Blockchain-Adresse umfasst.

8. Verfahren nach einem der vorangehenden Ansprüche, wobei der von dem ersten Eintrag (116) umfasste Hashwert (211) des digitalen Dokuments (210) mit einem ersten öffentlichen kryptographischen Schlüssel (208) des Ausstellers des digitalen Dokuments (210) verschlüsselt ist, wobei das Ausführen der Programminstruktionen des Smart Contracts (118) durch den ersten Blockchain-Server (100, 130) ferner umfasst:
• Senden einer Entschlüsselungsanfrage zum Entschlüsseln des von dem ersten Eintrag (116) umfassten verschlüsselten Hashwert (211) des digitalen Dokuments (210) von dem ersten Blockchain-Server (100, 130) über das Netzwerk (160) an ein Ausstellercomputersystem (200) des Ausstellers zusammen mit einer Eintragungsbestätigung über das Eintragen des zweiten Eintrags (112) in den zusätzlichen zweiten Block (110) der Blockchain (108),
• Empfangen des von dem Ausstellercomputersystem (200) unter Verwendung eines dem ersten öffentlichen kryptographischen Schlüssel (208) des Ausstellers zugeordneten ersten privaten kryptographischen Schlüssels (206) entschlüsselten Hashwerts (211) durch den Blockchain-Server (100, 130) über das Netzwerk (160) zum Weiterleiten an das Prüfcomputersystem (300).

9. Verfahren nach einem der Ansprüche 1 bis 7, wobei der von dem ersten Eintrag (116) umfasste Hashwert (211) des digitalen Dokuments (210) mit einem ersten öffentlichen kryptographischen Schlüssel (208) des Ausstellers des digitalen Dokuments (210) verschlüsselt ist, wobei es sich bei dem von dem ersten Blockchain-Server (100, 130) zum Prüfen an das Prüfcomputersystem (300) gesendeten Hashwert (211) um den verschlüsselten Hash-wert (211) handelt, dessen Entschlüsselung auf Anfrage des Prüfcomputersystems (300) durch den Aussteller erfolgt unter der Voraussetzung des Eintragens des zweiten Eintrags (112) in den zusätzlichen zweiten Block (110) der Blockchain (108).

10. Verfahren nach Anspruch 9, wobei zusammen mit dem verschlüsselten Hashwert (211) der Identifikator des Ausstellers des digitalen Dokuments (210) an den Prüfcomputersystem (300) gesendet wird zum Identifizieren des Ausstellers für das Entschlüsseln des verschlüsselten Hashwerts (211) des digitalen Dokuments (210) und/oder
wobei zusammen mit dem verschlüsselten Hashwert (211) des digitalen Dokuments (210) der erste öffentliche kryptographische Schlüssel (208) des Ausstellers gesendet wird zum Überprüfen eines von dem Aussteller bereitgestellten entschlüsselten Hashwert (211) durch Verschlüsseln des bereitgestellten Hashwerts (211) mit dem ersten öffentlichen kryptographischen Schlüssel (208) und Abgleich mit dem von dem ersten Blockchain-Server (100, 130) gesendeten verschlüsselten Hashwert (211).

11. Verfahren nach einem der vorangehenden Ansprüche, wobei das digitale Dokument (210) einen Datensatz mit Angaben (209) umfasst, bei welchen es sich um Kopien von Angaben aus ein oder mehrerer von ein oder mehreren physischen Dokumenten bereitgestellten Datensätzen, von dem Aussteller des digitalen Dokuments (210) erstellte Angaben und/oder von dem Inhaber des digitalen Dokuments (210) erstellte Angaben handelt, und/oder
wobei das digitale Dokument (210) einen einem Dokumenteninhaber zugeordneten öffentlichen kryptographischen Schlüssel umfasst und/oder
wobei der erste Eintrag (116) einen Identifikator des Ausstellers umfasst und/oder
wobei der erste Eintrag (116) einen Identifikator des digitalen Dokuments (210) umfasst.

12. Verfahren nach einem der vorangehenden Ansprüche, wobei das Verfahren ferner ein Eintragen des digitalen Dokuments (210) in der Blockchain (108) im Zuge eines Ausstellens des digitalen Dokuments (210) durch den Aussteller umfasst, wobei das Eintragen des digitalen Dokuments (210) umfasst:
• Empfangen eine Eintragungsanfrage zum Eintragen des digitalen Dokuments (210) von dem Ausstellercomputersystem (200) des Ausstellers durch einen zweiten Blockchain-Server (100, 130), wobei die Eintragungsanfrage den von einem Aussteller des digitalen Dokuments (210) signierten Hashwert (211) des digitalen Dokuments (210) umfasst, wobei der Aussteller des digitalen Dokuments (210) mit der Signatur eine erfolgreiche Verifikation ein oder mehrerer von dem digitalen Dokument (210) umfasster Angaben (209) bestätigt,
• Ausführen der Programminstruktionen des Smart Contracts (118) durch den zweiten Blockchain-Server (100, 130), wobei ein Ausführen der Programminstruktionen des Smart Contracts (118) ein Prüfen der Signatur des Hashwerts (211) umfasst, wobei auf eine erfolgreiche Prüfung der Signatur des Hashwerts (211) hin der erste Eintrag (116) erstellt und in dem ersten Block (114) der Blockchain (108) eingetragen wird.

13. Verfahren nach einem der vorangehenden Ansprüche, wobei ein zweiter öffentlicher kryptographischer Schlüssel (308) des Ausstellers als Signaturprüfschlüssel zum Prüfen der Signatur des Ausstellers in der Blockchain (108) eingetragen ist.

14. Blockchain-Server (100, 130) zum Prüfen der Gültigkeit eines digitalen Dokuments (210) unter Verwendung einer Blockchain (108), welche der Blockchain-Server (100, 130) verwaltet und welcher ein Smart Contract (118) mit ersten Programminstruktionen zugeordnet ist,
wobei der Blockchain-Server (100, 130) einen Prozessor (102, 132), einen Speicher (106, 136) mit zweiten Programminstruktionen (104, 134) und einen Kommunikationsschnittstelle (120, 140) zur Kommunikation über ein Netzwerk (160) umfasst,
wobei ein Ausführen der zweiten Programminstruktionen (104, 134) durch den Prozessor (102, 132) den Prozessor (102, 132) dazu veranlasst den Blockchain-Server (100, 130) zum Ausführen eines Verfahrens zum Verifizieren des digitalen Dokuments (210) zu steuern, wobei das Verfahren umfasst:
• Empfangen einer Leseanfrage zum Auslesen des Hashwerts (211) des digitalen Dokuments (210) aus der Blockchain (108) durch einen ersten Blockchain-Server (100, 130) von einem das digitale Dokument (210) prüfenden Prüfcomputersystem (300) über das Netzwerk (160) unter Verwendung der Kommunikationsschnittstelle (120, 140), **dadurch gekennzeichnet, dass** das Verfahren weiterhin umfasst:
• Ausführen der ersten Programminstruktionen des Smart Contracts (118) durch den ersten Blockchain-Server (100, 130), wobei ein Ausführen der ersten Programminstruktionen des Smart Contracts (118) ein Eintragen eines von dem Prüfcomputersystem (300) signierten zweiten Eintrags (112) in einen zusätzlichen zweiten Block (110) der Blockchain (108) umfasst, wobei der zweite Eintrag (112) eine Prüfung durch das Prüfcomputersystem (300) anzeigt,
• auf das Eintragen des zweiten Eintrags (112) in den zusätzlichen zweiten Block (110) der Blockchain (108) hin, Senden des von dem ersten Eintrag (116) umfassten Hashwerts (211) des digitalen Dokuments (210) an das Prüfcomputersystem (300) durch den ersten Blockchain-Server (100, 130) über das Netzwerk (160) unter Verwendung der Kommunikationsschnittstelle (120, 140) zum Prüfen eines vom dem Prüfcomputersystem (300) für das zu prüfende digitale Dokument (210) berechneten Hashwerts (211), wobei das zu prüfende digitale Dokument (210) von dem Prüfcomputersystem (300) als gültig anerkannt wird, falls der von dem ersten Blockchain-Server (100, 130) gesendete Hashwert (211) mit dem von dem Prüfcomputersystem (300) für das zu prüfende digitale Dokument (210) berechneten Hashwert (211) übereinstimmt.

15. Blockchain-Server (100, 130) nach Anspruch 14, wobei ein Ausführen der zweiten Programminstruktionen (104, 134) durch den Prozessor (102, 132) den Prozessor (102, 132) dazu veranlasst den Blockchain-Server (100, 130) zum Eintragen des digitalen Dokuments (210) in der Blockchain (108) im Zuge eines Ausstellens des digitalen Dokuments (210) durch den Aussteller zu steuern, wobei das Eintragen des digitalen Dokuments (210) umfasst:
• Empfangen eine Eintragungsanfrage zum Eintragen des digitalen Dokuments (210) von dem Ausstellercomputersystem (200) des Ausstellers durch einen Blockchain-Server (100, 130), wobei die Eintragungsanfrage den von einem Aussteller des digitalen Dokuments (210) signierten Hashwert (211) des digitalen Dokuments (210) umfasst, wobei der Aussteller des digitalen Dokuments (210) mit der Signatur eine erfolgreiche Verifikation ein oder mehrerer von dem digitalen Dokument (210) umfasster Angaben (209) bestätigt,
• Ausführen der ersten Programminstruktionen des Smart Contracts (118) durch den Blockchain-Server (100, 130), wobei ein Ausführen der ersten Programminstruktionen des Smart Contracts (118) ein Prüfen der Signatur des Hashwerts (211) umfasst, wobei auf eine erfolgreiche Prüfung der Signatur des Hashwerts (211) hin der erste Eintrag (116) erstellt und in dem ersten Block (114) der Blockchain (108) eingetragen wird.

## Claims

1. A method for checking the validity of a digital document (210) with use of a blockchain (108) which is associated with a smart contract (118) with program instructions,
wherein a first block (114) of the blockchain (108) comprises a first entry (116) associated with the digital document (210), wherein the first entry (116) comprises a hash value (211) of the digital document (210) signed by an issuer of the digital document (210), wherein the issuer of the digital document (210) confirms, with the signature, a successful verification of one or more details (209) comprised by the digital document (210),
wherein the method comprises:
• receiving a read request to read the hash value (211) of the digital document (210) from the blockchain (108) by a first blockchain server (100, 130) from a checking computer system (300) for checking the digital document (210) via a network (160),
**characterised in that** the method furthermore comprises:
• executing the program instructions of the smart contract (118) by the first blockchain server (100, 130), wherein an execution of the program instructions of the smart contract (118) comprises an entering of a second entry (112), signed by the checking computer system (300), into an additional second block (110) of the blockchain (108), wherein the second entry (112) indicates a checking by the checking computer system (300),
• in response to the entering of the second entry (112) into the additional second block (110) of the blockchain (108), sending the hash value (211) of the digital document (210), comprised by the first entry (116), to the checking computer system (300) by the first blockchain server (100, 130) via the network (160) to check a hash value (211) calculated by the checking computer system (300) for the digital document (210) to be checked, wherein the digital document (210) to be checked is acknowledged by the checking computer system (300) as being valid if the hash value (211) sent by the first blockchain server (100, 130) matches with the hash value (211) calculated by the checking computer system (300) for the digital document (210) to be checked.

2. The method according to claim 1, wherein a signature checking key of the checking computer system (300) is entered in the blockchain (108) to check the signature of the second entry (112).

3. The method according to any one of the preceding claims, wherein the second entry (112) comprises an identifier of the checking computer system (300).

4. The method according to any one of the preceding claims, wherein the second entry (112) comprises an updated value of a check counter to indicate the checking by the checking computer system (300).

5. The method according to claim 4, wherein a determination of the updated value of the check counter comprises an ascertainment of the value of the check counter last entered in the blockchain (108) and an incrementing of the check counter.

6. The method according to any one of claims 4 to 5, wherein the check counter is associated with the checking computer system (300) and counts the number of document checks performed by the checking computer system (300), or wherein the check counter is associated with the digital document (210) and counts the number of checks relating to the digital document (210).

7. The method according to any one of the preceding claims, wherein the second entry (112) comprises a transaction of an issuing charge of a cryptocurrency from a blockchain address fixedly associated with the checker to a blockchain address associated with the issuer of the digital document (210).

8. The method according to any one of the preceding claims, wherein the hash value (211) of the digital document (210) comprised by the first entry (116) is encrypted with a first public cryptographic key (208) of the issuer of the digital document (210), wherein the execution of the program instructions of the smart contract (118) by the first blockchain server (100, 130) further comprises:
• sending a decryption request to decrypt the encrypted hash value (211) of the digital document (210) comprised by the first entry (116) from the first blockchain server (100, 130) via the network (160) to an issuer computer system (200) of the issuer together with an entry confirmation regarding the entering of the second entry (112) into the additional second block (110) of the blockchain (108),
• receiving the hash value (211) decrypted by the issuer computer system (200) with use of a first private cryptographic key (206) associated with the first public cryptographic key (208) of the issuer by the blockchain server (100, 130) via the network (160) for forwarding to the checking computer system (300).

9. The method according to any one of claims 1 to 7, wherein the hash value (211) of the digital document (210) comprised by the first entry (116) is encrypted with a first public cryptographic key (208) of the issuer of the digital document (210), wherein the hash value (211) sent, for checking, from the first blockchain server (100, 130) to the checking computer system (300) is the encrypted hash value (211), the decryption of which is performed by the issuer upon request of the checking computer system (300) on the precondition that the second entry (112) has been entered into the additional second block (110) of the blockchain (108).

10. The method according to claim 9, wherein, together with the encrypted hash value (211), the identifier of the issuer of the digital document (210) is sent to the checking computer system (300) to identify the issuer for the decryption of the encrypted hash value (211) of the digital document (210) and/or
wherein, together with the encrypted hash value (211) of the digital document (210), the first public cryptographic key (208) of the issuer is sent to check a decrypted hash value (211) provided by the issuer by encrypting the provided hash value (211) with the first public cryptographic key (208) and comparing it with the encrypted hash value (211) sent by the first blockchain server (100, 130).

11. The method according to any one of the preceding claims, wherein the digital document (210) comprises a dataset with details (209), which are copies of details from one or more datasets provided by one or more physical documents, details created by the issuer of the digital document (210), and/or details created by the owner of the digital document (210), and/or
wherein the digital document (210) comprises a public cryptographic key associated with the document owner and/or
wherein the first entry (116) comprises an identifier of the issuer and/or
wherein the first entry (116) comprises an identifier of the digital document (210).

12. The method according to any one of the preceding claims, wherein the method further comprises an entering of the digital document (210) in the blockchain (108) during the course of an issuing of the digital document (210) by the issuer, wherein the entering of the digital document (210) comprises:
• receiving an entry request to enter the digital document (210) from an issuer computer system (200) of the issuer by a second blockchain server (100, 130), wherein the entry request comprises the hash value (211) of the digital document (210) signed by an issuer of the digital document (210), wherein the issuer of the digital document (210) confirms, with the signature, a successful verification of one or more details (209) comprised by the digital document (210),
• executing the program instructions of the smart contract (118) by the second blockchain server (100, 130), wherein an execution of the program instructions of the smart contract (118) comprises a checking of the signature of the hash value (211), wherein, following a successful checking of the signature of the hash value (211), the first entry (116) is created and is entered in the first block (114) of the blockchain (108).

13. The method according to any one of the preceding claims, wherein a second public cryptographic key (308) of the issuer is entered in the blockchain (108) as a signature checking key for checking the signature of the issuer.

14. A blockchain server (100, 130) for checking the validity of a digital document (210) with use of a blockchain (108) which manages the blockchain server (100, 130) and which is associated with a smart contract (118) with first program instructions,
wherein the blockchain server (100, 130) comprises a processor (102, 132), a memory (106, 136) with second program instructions (104, 134) and a communication interface (120, 140) for communication via a network (160),
wherein an execution of the second program instructions (104, 134) by the processor (102, 132) prompts the processor (102, 132) to control the blockchain server (100, 130) to carry out a method for verifying the digital document (210), wherein the method comprises:
• receiving a read request to read the hash value (211) of the digital document (210) from the blockchain (108) by a first blockchain server (100, 130) by a checking computer system (300) checking the digital document (210) via the network (160) with use of the communication interface (120, 140),
**characterised in that** the method furthermore comprises:
• executing the first program instructions of the smart contract (118) by the first blockchain server (100, 130), wherein an execution of the first program instructions of the smart contract (118) comprises an entering of a second entry (112), signed by the checking computer system (300), into an additional second block (110) of the blockchain (108), wherein the second entry (112) indicates a checking by the checking computer system (300),
• in response to the entering of the second entry (112) into the additional second block (110) of the blockchain (108), sending the hash value (211) of the digital document (210) comprised by the first entry (116) to the checking computer system (300) by the first blockchain server (100, 130) via the network (160) with use of the communication interface (120, 140) to check a hash value (211) calculated by the checking computer system (300) for the digital document (210) to be checked, wherein the digital document (210) to be checked is acknowledged by the checking computer system (300) as being valid if the hash value (211) sent by the first blockchain server (100, 130) matches the hash value (211) calculated by the checking computer system (300) for the digital document (210) to be checked.

15. The blockchain server (100, 130) according to claim 14, wherein an execution of the second program instructions (104, 134) by the processor (102, 132) prompts the processor (102, 132) to control the blockchain server (100, 130) to enter the digital document (210) in the blockchain (108) in the course of an issuing of the digital document (210) by the issuer, wherein the entering of the digital document (210) comprises:
• receiving an entry request to enter the digital document (210) from the issuer computer system (200) of the issuer by a blockchain server (100, 130), wherein the entry request comprises the hash value (211) of the digital document (210) signed by an issuer of the digital document (210), wherein the issuer of the digital document (210) confirms, with the signature, a successful verification of one or more details (209) comprised by the digital document (210),
• executing the first program instructions of the smart contract (118) by the blockchain server (100, 130), wherein an execution of the first program instructions of the smart contract (118) comprises a checking of the signature of the hash value (211), wherein, following a successful checking of the signature of the hash value (211), the first entry (116) is created and is entered in the first block (114) of the blockchain (108).

## Revendications

1. Procédé de vérification de la validité d'un document numérique (210) moyennant l'emploi d'une chaine de blocs (108), à laquelle est associé un contrat intelligent, smart contract, (118), avec des instructions de programme,
dans lequel un premier bloc (114) de la chaine de blocs (108) comprend une première entrée (116) associée au document numérique (210), dans lequel la première entrée (116) comprend une valeur de hachage (211) signée par un éditeur du document numérique (210), dans lequel l'éditeur du document numérique (210), avec la signature, confirme une vérification réussie d'une ou de plusieurs indications (209) comprises dans le document numérique (210),
le procédé comprenant :
• la réception d'une demande de lecture pour la lecture de la valeur de hachage (211) du document numérique (210) à partir de la chaine de blocs (108) par un premier serveur de chaine de blocs (100, 130) à partir d'un système informatique de vérification (300) vérifiant le document numérique (210) par le biais d'un réseau (160), **caractérisé en ce que** le procédé comprenne en outre :
• l'exécution des instructions de programme du smart contract (118) par le premier serveur de chaine de blocs (100, 130), où l'exécution des instructions de programme du smart contract (118) comprend une introduction d'une deuxième entrée (112) signée par le système informatique de vérification (300) dans un deuxième bloc (110) supplémentaire de la chaine de blocs (108), où la deuxième entrée (112) indique une vérification par le système informatique de vérification (300),
• suite à l'introduction de la deuxième entrée (112) dans le deuxième bloc (110) supplémentaire de la chaîne de blocs (108), l'envoi de la valeur de hachage (211) du document numérique (210) comprise par la première entrée (116) au système informatique de vérification (300) par le premier serveur de chaine de blocs (100, 130) par le biais du réseau (160) pour la vérification d'une valeur de hachage (211) calculée pour le document numérique (210) à vérifier par le système informatique de vérification (300), où le document numérique (210) à vérifier est reconnu comme valide par le système informatique de vérification (300), dans le cas où la valeur de hachage (211) envoyée par le premier serveur de chaine de blocs (100, 130) correspond avec la valeur de hachage (211) calculée par le système informatique de vérification (300) pour le document numérique (210) à vérifier.

2. Procédé selon la revendication 1, dans lequel une clé de vérification de signature du système informatique de vérification (300) est enregistrée pour la vérification de la signature de la deuxième entrée (112) dans la chaîne de blocs (108).

3. Procédé selon l'une des revendications précédentes, dans lequel la deuxième entrée (112) comprend un identificateur du système informatique de vérification (300).

4. Procédé selon l'une des revendications précédentes, dans lequel la deuxième entrée (112) comprend une valeur actualisée d'un compteur de vérification pour l'affichage de la vérification par le système informatique de vérification (300).

5. Procédé selon la revendication 4, dans lequel une détermination de la valeur actualisée du compteur de vérification comprend une détermination de la valeur du compteur de vérification enregistrée en dernier lieu dans la chaine de blocs (108) et une incrémentation du compteur de vérification.

6. Procédé selon l'une des revendications 4 à 5, dans lequel le compteur de vérification est associé au système informatique de vérification (300) et compte le nombre des vérifications de documents exécutées par le système informatique de vérification (300) et dans lequel le compteur de vérification est associé au document numérique (210) et le nombre de vérifications compte lesquelles ont pour objet le document numérique (210).

7. Procédé selon l'une des revendications précédentes, dans lequel la deuxième entrée (112) comprend une transaction de frais d'exposition d'une crypto monnaie d'une adresse de chaine de blocs associée au vérificateur vers une adresse de chaine de blocs associée à l'éditeur du document numérique (210).

8. Procédé selon l'une des revendications précédentes, dans lequel la valeur de hachage (211) du document numérique (210) comprise dans la première entrée (116) est chiffrée avec une première clé cryptographique publique (208) de l'éditeur du document numérique (210), dans lequel l'exécution des instructions de programme du smart contract (118) par le premier serveur de chaine de blocs (100, 130) comprend en outre :
• l'envoi d'une demande de déchiffrement pour le déchiffrement de la valeur de hachage (211) du document numérique (210) chiffrée comprise dans la première entrée (116) par le premier serveur de chaine de blocs (100, 130) par le biais du réseau (160) à un système informatique d'éditeur (200) de l'éditeur, conjointement avec une attestation d'entrée concernant l'enregistrement de la deuxième entrée (112) dans le deuxième bloc (110) supplémentaire de la chaine de blocs (108),
• la réception de la valeur de hachage (211) déchiffrée par le système informatique d'éditeur (200) moyennant l'emploi de la première clé cryptographique privée (206) associée à la première clé cryptographique publique (208) de l'éditeur, par le serveur de chaine de blocs (100, 130) par le biais du réseau (160), pour la poursuite de la transmission au système informatique de vérification (300).

9. Procédé selon l'une des revendications 1 à 7, dans lequel la valeur de hachage (211) du document numérique (210) comprise dans la première entrée (116) est chiffrée avec une première clé cryptographique publique (208) de l'éditeur du document numérique (210), où, dans le cas de la valeur de hachage (211) envoyée du premier serveur de chaine de blocs (100, 130) pour la vérification au système informatique de vérification (300), il s'agit de la valeur de hachage (211) chiffrée dont le déchiffrement a lieu suite à une demande du système informatique de vérification (300) moyennant la condition de l'introduction de la deuxième entrée (112) dans le deuxième bloc supplémentaire (110) de la chaine de blocs (108).

10. Procédé selon la revendication 9, dans lequel, conjointement avec la valeur de hachage (211) chiffrée, l'identificateur de l'éditeur du document numérique (210) est envoyé au système informatique de vérification (300) pour l'identification de l'éditeur pour le déchiffrement de la valeur de hachage (211) chiffrée du document numérique (210), et/ou
dans lequel, conjointement avec la valeur de hachage (211) chiffrée du document numérique (210), la première clé cryptographique publique (208) de l'éditeur est envoyée pour la vérification d'une valeur de hachage (211) déchiffrée fournie par l'éditeur par le chiffrement de la valeur de hachage (211) fournie avec la première clé cryptographique publique (208) et l'ajustement avec la valeur de hachage (211) chiffrée envoyée par le premier serveur de chaine de blocs (100, 130).

11. Procédé selon l'une des revendications précédentes, dans lequel le document numérique (210) comprend un ensemble de données avec des indications (209), dans lesquelles il s'agit de copies d'indications provenant d'un ou de plusieurs parmi un ou plusieurs ensembles de données fournis par un ou plusieurs documents physiques, d'indications établies par l'éditeur du document numérique (210), et/ou d'indications établies par le propriétaire du document numérique (210), et/ou
dans lequel le document numérique (210) comprend une clé cryptographique publique associée à un propriétaire de document, et/ou
dans lequel la première entrée (116) comprend un identificateur de l'éditeur et/ou
dans lequel la première entrée (116) comprend un identificateur du document numérique (210).

12. Procédé selon l'une des revendications précédentes, le procédé comprenant en outre l'enregistrement du document numérique (210) dans la chaine de blocs (108) dans le cadre d'une édition du document numérique (210) par l'éditeur, dans lequel l'enregistrement du document numérique (210) comprend :
• la réception d'une demande d'enregistrement pour l'enregistrement du document numérique (210) du système informatique d'éditeur (200) de l'éditeur par un deuxième serveur de chaine de blocs (100, 130), dans lequel la demande d'enregistrement comprend la valeur de hachage (211) du document numérique (210) signée par l'éditeur du document numérique (210), dans lequel l'éditeur du document numérique (210) confirme avec la signature une vérification réussie d'une ou de plusieurs indications (209) comprises par le document numérique (210),
• l'exécution des instructions de programme du smart contract (118) par le deuxième serveur de chaine de bloc (100, 130), où l'exécution des instructions de programme du smart contract (118) comprend une vérification de la signature de la valeur de hachage (211), où, suite à une vérification réussie de la valeur de hachage (211), la première entrée (116) est établie et est enregistrée dans le premier bloc (114) de la chaine de blocs (108).

13. Procédé selon l'une des revendications précédentes, dans lequel une deuxième clé cryptographique publique (308) de l'éditeur est enregistrée en tant que clé de vérification de signature pour la vérification de la signature de l'éditeur dans la chaine de blocs (108).

14. Serveur de chaine de blocs (100, 130) pour la vérification de la validité d'un document numérique (210) moyennant l'emploi d'une chaine de blocs (108), laquelle est gérée par le serveur de chaine de blocs (100, 130) et à laquelle un smart contract (118) avec des premières instructions de programme est associé,
le serveur de chaine de blocs (100, 130) comprenant un processeur (102, 132), une mémoire (106, 136) avec des deuxièmes instructions de programme (104, 134) et une interface de communication (120, 140) pour la communication par le biais d'un réseau (160),
dans lequel une exécution des deuxièmes instructions de programme (104, 134) par le processeur (102, 132) fait en sorte que le processeur (102, 132) fasse en sorte que le serveur de chaine de blocs (100, 130) commande un procédé de vérification du document numérique (210), le procédé comprenant :
• la réception d'une demande de lecture pour la lecture de la valeur de hachage (211) du document numérique (210) à partir de la chaine de blocs (108) par un premier serveur de chaine de blocs (100, 130) d'un système informatique de vérification (300) vérifiant le document numérique (210) par le biais du réseau (160), moyennant l'emploi de l'interface de communication (120, 140), **caractérisé en ce que** le procédé comprenne en outre :
• l'exécution des premières instructions de programme du smart contract (118) par le premier serveur de chaine de blocs (100, 130), où l'exécution des premières instructions de programme du smart contract (118) comprend une introduction d'une deuxième entrée (112) signée par le système informatique de vérification (300) dans un deuxième bloc (110) supplémentaire de la chaine de blocs (108), où la deuxième entrée (112) indique une vérification par le système informatique de vérification (300),
• suite à l'introduction de la deuxième entrée (112) dans le deuxième bloc (110) supplémentaire de la chaîne de blocs (108), l'envoi de la valeur de hachage (211) du document numérique (210) comprise par la première entrée (116) au système informatique de vérification (300) par le premier serveur de chaine de blocs (100, 130) par le biais du réseau (160), moyennant l'emploi de l'interface de communication (120, 140), pour la vérification, par le système informatique de vérification (300), d'une valeur de hachage (211) calculée pour le document numérique (210) à vérifier, où le document numérique (210) à vérifier est reconnu comme valide par le système informatique de vérification (300) dans le cas où la valeur de hachage (211) envoyée par le premier serveur de chaine de blocs (100, 130) correspond avec la valeur de hachage (211) calculée par le système informatique de vérification (300) pour le document numérique (210) à vérifier.

15. Serveur de chaine de blocs (100, 130) selon la revendication 14, dans lequel une exécution des deuxièmes instructions de programme (104, 134) par le processeur (102, 132) fait en sorte que le processeur (102, 132) commande le serveur de chaine de blocs (100, 130) pour l'enregistrement du document numérique (210) dans la chaine de blocs (108) dans le cadre d'une édition du document numérique (210) par l'éditeur, où l'enregistrement du document numérique (210) comprend :
• la réception d'une demande d'enregistrement pour l'enregistrement du document numérique (210) du système informatique d'éditeur (200) de l'éditeur par un serveur de chaine de blocs (100, 130), dans lequel la demande d'enregistrement comprend la valeur de hachage (211) du document numérique (210) signée par un éditeur du document numérique (210), dans lequel l'éditeur du document numérique (210) confirme avec la signature une vérification réussie d'une ou de plusieurs indications (209) comprises par le document numérique (210),
• l'exécution des premières instructions de programme du smart contract (118) par le serveur de chaine de blocs (100, 130), où l'exécution des premières instructions de programme du smart contract (118) comprend une vérification de la signature de la valeur de hachage (211), où, suite à une vérification réussie de la signature de la valeur de hachage (211), la première entrée (116) est établie et est enregistrée dans le premier bloc (114) de la chaine de blocs (108).
